# EUROPEAN PATENT APPLICATION

(11) **EP 4 561 144 A1**
(43) Date of publication of application: **28.05.2025**
(21) Application number: 23842035.0
(22) Date of filing: 28.06.2023
(51) Int. Cl.: H04W 24/02

(54) **L1/L2 MOBILITY COMMAND PROCESSING METHOD AND APPARATUS, AND STORAGE MEDIUM**

(30) Priority: 21.07.2022 CN 202210860446
(71) Applicant: Datang Mobile Communications Equipment Co., Ltd., Beijing 100085 (CN)
(72) Inventor: YAN, Xue, Beijing 100085 (CN); XU, Meng, Beijing 100085 (CN); ZHANG, Bufang, Beijing 100085 (CN); ZENG, Erlin, Beijing 100085 (CN); LIANG, Jing, Beijing 100085 (CN)
(74) Representative: Studio Torta S.p.A.
(86) International application number: PCT/CN2023/103190
(87) International publication number: WO 2024/016969

(57) **Abstract**

The present disclosure provides an L1/L2 mobility command processing method and apparatus, and a storage medium. A terminal receives an L1/L2 mobility command sent by a network device, where the L1/L2 mobility command includes indication information of a target cell, and performs a preset operation according to the L1/L2 mobility command or after the terminal successfully executes the L1/L2 mobility command. The terminal performs the preset operation after receiving the L1/L2 mobility command, which prevents the terminal from not knowing how to respond to and process the L1/L2 mobility command, prevents some failures from occurrence of, thereby avoiding a failure of the L1/L2 mobility with serving cell change, and improving the mobility performance.

## Description

The present disclosure claims priority to Chinese Patent Application No. 202210860446.6, filed with the China National Intellectual Property Administration on July 21, 2022 and entitled "L1/L2 MOBILITY COMMAND PROCESSING METHOD AND APPARATUS, AND STORAGE MEDIUM", which is hereby incorporated by reference in its entirety.

### TECHNICAL FIELD

The present disclosure relates to the field of communication technologies and, more specifically, to an L1/L2 mobility command processing method and apparatus, and a storage medium.

### BACKGROUND

Before R17, only L3 mobility is considered to complete cell change/addition, that is, a network sends an L3 mobility command to a UE, and when the UE receives the L3 mobility command sent by the network, the UE executes a mobility process to access a target cell to complete the cell change/addition. Starting from R17, an L1/L2 mobility command is considered, that is, a network can send a mobility command to a UE through an L1/L2 signaling to instruct the UE to execute cell change/addition.

However, serving cell change may fail after the UE receives the L1/L2 mobility command, which affects the mobility performance.

### SUMMARY

The present disclosure provides an L1/L2 mobility command processing method and apparatus, and a storage medium, to avoid a failure of the L1/L2 mobility with serving cell change, thereby improving the mobility performance.

In a first aspect, the present disclosure provides an L1/L2 mobility command processing method, applied to a terminal, and the method includes:
receiving an L1/L2 mobility command sent by a network device, where the L1/L2 mobility command includes indication information of a target cell; and
performing a preset operation according to the L1/L2 mobility command or after the terminal successfully executes the L1/L2 mobility command.

Optionally, the performing the preset operation includes one or more of following operations:
applying the configuration information of the target cell in configuration information of candidate cells;
performing inter-layer transmission of a notification of beam switch or serving cell change;
performing a specific operation corresponding to a type of the configuration information of the candidate cells;
making a change to hybrid automatic repeat request HARQ;
applying system information of the target cell and maintaining updating of the system information;
maintaining paging of the target cell;
resetting, if the target cell is a special cell SpCell, a radio link monitoring RLM configuration parameter;
applying, if the target cell is a SpCell, an RLM configuration parameter of the target cell;
stopping beam failure detection BFD and/or RLM for a source cell; and
enabling BFD and/or RLM for the target cell.

Optionally, the applying the configuration information of the target cell in the configuration information of the candidate cells includes:
applying, if the configuration information of the candidate cells is a first type of configuration information of the candidate cells, configuration information of a physical layer of the target cell in the configuration information of the candidate cells, where the first type of the configuration information of the candidate cells includes configuration information of a physical layer of each candidate cell; or
applying, if the configuration information of the candidate cells is a second type of configuration information of the candidate cells, configuration information of a physical layer, an MAC layer and an RLC layer of the target cell in the configuration information of the candidate cells, where the second type of the configuration information of the candidate cells includes configuration information of a physical layer, a medium access control MAC layer and a radio link control RLC layer of each candidate cell; or
applying, if the configuration information of the candidate cells is a third type of configuration information of the candidate cells, configuration information of a physical layer, an MAC layer, an RLC layer and a PDCP layer of the target cell in the configuration information of the candidate cells, where the third type of the configuration information of the candidate cells includes configuration information of a physical layer, an MAC layer, an RLC layer and a packet data convergence protocol PDCP layer of each candidate cell.

Optionally, the performing the inter-layer transmission of the notification of beam switch or serving cell change includes:
transmitting the notification of beam switch or serving cell change from a layer that receives the L1/L2 mobility command to other layers;
transmitting the notification of beam switch or serving cell change from a layer that receives the notification of beam switch or serving cell change to other layers.

Optionally, the applying the configuration information of the target cell in the configuration information of the candidate cells includes:
directly applying the configuration information of the target cell in the configuration information of the candidate cells through a radio resource control RRC layer; or
sending indication information to a lower layer through the RRC layer, where the indication information is used to enable the lower layer to apply, according to the indication information, configuration information of a corresponding layer of the target cell in the configuration information of the candidate cells; or
applying, after receiving the inter-layer transmitted notification of beam switch or serving cell change transmitted by other layers, configuration information of a corresponding layer of the target cell in the configuration information of the candidate cells.

Optionally, the performing the specific operation corresponding to the type of the configuration information of the candidate cells includes:
performing, if the configuration information of the candidate cells is a second type of configuration information of the candidate cells including configuration information of a physical layer, an MAC layer and an RLC layer of each candidate cell, one or more of the following specific operations corresponding to the type of the configuration information of the candidate cells:
resetting an MAC entity;
re-establishing an RLC entity; and
performing a PDCP recovery process.

Optionally, the performing the specific operation corresponding to the type of the configuration information of the candidate cells includes:
performing, if the configuration information of the candidate cells is a third type of configuration information of the candidate cells including configuration information of a physical layer, an MAC layer, an RLC layer and a PDCP layer of each candidate cell, one or more of the following specific operations corresponding to the type of the configuration information of the candidate cells:
resetting an MAC entity;
re-establishing an RLC entity; and
re-establishing a PDCP entity.

Optionally, if the pre-configured configuration information of the candidate cells includes at least two different types of configuration information of the candidate cells, before the applying the configuration information of the target cell in the configuration information of the candidate cells, the method further includes:
receiving indication information sent by the network device, where the indication information is used to indicate a type of the configuration information of the target cell that the terminal needs to apply; determining the type of the configuration information of the target cell according to the indication information, and applying the determined configuration information of the target cell to perform a preset operation corresponding to the type of the configuration information of the target cell; or
voluntarily determining the type of the configuration information of the target cell that the terminal needs to apply.

In a second aspect, the present disclosure provides an L1/L2 mobility command processing method, applied to a network device, and the method includes:
determining an L1/L2 mobility command to be sent, where the L1/L2 mobility command includes indication information of a target cell; and
sending the L1/L2 mobility command to a terminal.

Optionally, before the sending the L1/L2 mobility command to the terminal, the method further includes:
sending pre-configured configuration information of candidate cells related to L1/L2 mobility to the terminal.

Optionally, the configuration information of the candidate cells includes at least one piece of the following configuration information:
a first type of configuration information of the candidate cells, including configuration information of a physical layer of each candidate cell;
a second type of configuration information of the candidate cells, including configuration information of a physical layer, an MAC layer and a radio link control RLC layer of each candidate cell; and
a third type of configuration information of the candidate cells, including configuration information of a physical layer, an MAC layer, an RLC layer and a PDCP layer of each candidate cell.

Optionally, if the pre-configured configuration information of the candidate cells includes at least two different types of configuration information of the candidate cells, the method further includes:
sending indication information to the terminal, where the indication information is used to indicate a type of configuration information of the target cell that the terminal needs to apply.

In a third aspect, the present disclosure provides a terminal, including: a memory, a transceiver, and a processor:
where the memory is configured to store a computer program; the transceiver is configured to transmit and receive data under control of the processor; and the processor is configured to read the computer program in the memory and perform the following operations:
receiving an L1/L2 mobility command sent by a network device, where the L1/L2 mobility command includes indication information of a target cell; and
performing a preset operation according to the L1/L2 mobility command or after the terminal successfully executes the L1/L2 mobility command.

Optionally, the processor, when performing the preset operation, is configured to perform one or more of the following operations:
applying the configuration information of the target cell in configuration information of candidate cells;
performing inter-layer transmission of a notification of beam switch or serving cell change;
performing a specific operation corresponding to a type of the configuration information of the candidate cells;
making a change to hybrid automatic repeat request HARQ;
applying system information of the target cell and maintaining updating of the system information;
maintaining paging of the target cell;
resetting, if the target cell is a special cell SpCell, a radio link monitoring RLM configuration parameter;
applying, if the target cell is a SpCell, an RLM configuration parameter of the target cell;
stopping beam failure detection BFD and/or RLM for a source cell; and
enabling BFD and/or RLM for the target cell.

Optionally, the processor, when applying the configuration information of the target cell in the configuration information of the candidate cells, is configured to:
apply, if the configuration information of the candidate cells is a first type of configuration information of the candidate cells, configuration information of a physical layer of the target cell in the configuration information of the candidate cells, where the first type of the configuration information of the candidate cells includes configuration information of a physical layer of each candidate cell; or
apply, if the configuration information of the candidate cells is a second type of configuration information of the candidate cells, configuration information of a physical layer, an MAC layer and an RLC layer of the target cell in the configuration information of the candidate cells, where the second type of the configuration information of the candidate cells includes configuration information of a physical layer, a medium access control MAC layer and a radio link control RLC layer of each candidate cell; or
apply, if the configuration information of the candidate cells is a third type of configuration information of the candidate cells, configuration information of a physical layer, an MAC layer, an RLC layer and a PDCP layer of the target cell in the configuration information of the candidate cells, where the third type of the configuration information of the candidate cells includes configuration information of a physical layer, an MAC layer, an RLC layer and a packet data convergence protocol PDCP layer of each candidate cell.

Optionally, the processor, when performing the inter-layer transmission of the notification of beam switch or serving cell change, is configured to:
transmit the notification of beam switch or serving cell change from a layer that receives the L1/L2 mobility command to other layers;
transmit the notification of beam switch or serving cell change from a layer that receives the notification of beam switch or serving cell change to other layers.

Optionally, the processor, when applying the configuration information of the target cell in the configuration information of the candidate cells, is configured to:
directly apply the configuration information of the target cell in the configuration information of the candidate cells through a radio resource control RRC layer; or
send indication information to a lower layer through the RRC layer, where the indication information is used to enable the lower layer to apply, according to the indication information, configuration information of a corresponding layer of the target cell in the configuration information of the candidate cells; or
apply, after receiving the inter-layer transmitted notification of beam switch or serving cell change transmitted by other layers, configuration information of a corresponding layer of the target cell in the configuration information of the candidate cells.

Optionally, the processor, when performing the specific operation corresponding to the type of the configuration information of the candidate cells, is configured to:
perform, if the configuration information of the candidate cells is a second type of configuration information of the candidate cells including configuration information of a physical layer, an MAC layer and an RLC layer of each candidate cell, one or more of the following specific operations corresponding to the type of the configuration information of the candidate cells:
resetting an MAC entity;
re-establishing an RLC entity; and
performing a PDCP recovery process.

Optionally, the processor, when performing the specific operation corresponding to the type of the configuration information of the candidate cells, is configured to:
perform, if the configuration information of the candidate cells is a third type of configuration information of the candidate cells including configuration information of a physical layer, an MAC layer, an RLC layer and a PDCP layer of each candidate cell, one or more of the following specific operations corresponding to the type of the configuration information of the candidate cells:
resetting an MAC entity;
re-establishing an RLC entity; and
re-establishing a PDCP entity.

Optionally, if the pre-configured configuration information of the candidate cells includes at least two different types of configuration information of the candidate cells, the processor, before applying the configuration information of the target cell in the configuration information of the candidate cells, is further configured to:
receive indication information sent by the network device, where the indication information is used to indicate a type of the configuration information of the target cell that the terminal needs to apply; determine the type of the configuration information of the target cell according to the indication information, and apply the determined configuration information of the target cell to perform a preset operation corresponding to the type of the configuration information of the target cell; or
voluntarily determine the type of the configuration information of the target cell that the terminal needs to apply.

In a fourth aspect, the present disclosure provides a network device, including a memory, a transceiver, and a processor:
where the memory is configured to store a computer program; the transceiver is configured to transmit and receive data under control of the processor; and the processor is configured to read the computer program in the memory and perform the following operations:
determining an L1/L2 mobility command to be sent, where the L1/L2 mobility command includes indication information of a target cell; and
sending the L1/L2 mobility command to a terminal.

Optionally, the processor, before sending the L1/L2 mobility command to the terminal, is further configured to:
send pre-configured configuration information of candidate cells related to L1/L2 mobility to the terminal.

Optionally, the configuration information of the candidate cells includes at least one piece of the following configuration information:
a first type of configuration information of the candidate cells, including configuration information of a physical layer of each candidate cell;
a second type of configuration information of the candidate cells, including configuration information of a physical layer, an MAC layer and a radio link control RLC layer of each candidate cell; and
a third type of configuration information of the candidate cells, including configuration information of a physical layer, an MAC layer, an RLC layer and a PDCP layer of each candidate cell.

Optionally, if the pre-configured configuration information of the candidate cells includes at least two different types of configuration information of the candidate cells, the processor is further configured to:
send indication information to the terminal, where the indication information is used to indicate a type of configuration information of the target cell that the terminal needs to apply.

In a fifth aspect, the present disclosure provides an L1/L2 mobility command processing apparatus, including:
a communication unit, configured to receive an L1/L2 mobility command sent by a network device, where the L1/L2 mobility command includes indication information of a target cell; and
a processing unit, configured to perform a preset operation according to the L1/L2 mobility command or after the terminal successfully executes the L1/L2 mobility command.

In a sixth aspect, the present disclosure provides an L1/L2 mobility command processing, including:
a determining unit, configured to determine an L1/L2 mobility command to be sent, where the L1/L2 mobility command includes indication information of a target cell; and
a communication unit, configured to send the L1/L2 mobility command to a terminal.

In a seventh aspect, the present disclosure provides a processor-readable storage medium storing a computer program, where the computer program is used to enable the processor to execute the method described in the first aspect or the second aspect.

The present disclosure provides an L1/L2 mobility command processing method and apparatus, and a storage medium. A terminal receives an L1/L2 mobility command sent by a network device, where the L1/L2 mobility command includes indication information of a target cell, and performs a preset operation according to the L1/L2 mobility command or after the terminal successfully executes the L1/L2 mobility command. The terminal performs the preset operation after receiving the L1/L2 mobility command, which prevents the terminal from not knowing how to respond to and process the L1/L2 mobility command, prevents some failures from happening, thereby avoiding a failure of the L1/L2 mobility with serving cell change, and improving the mobility performance.

It should be understood that what is described in the "SUMMARY" section above is not intended to limit key or important features of embodiments of the present disclosure, nor is it intended to limit the scope of the present disclosure. Other features of the present disclosure will become readily understood from the following description.

### BRIEF DESCRIPTION OF DRAWINGS

In order to describe the technical solutions in the present disclosure or in the prior art more clearly, drawings that need to be used in the description of embodiments or prior art will be introduced briefly in the following. Obviously, the drawings described below are some embodiments of the present disclosure, and for those of ordinary skill in the art, other drawings can be obtained based on these drawings without paying creative efforts.
FIG. 1 is a schematic diagram of a system for an L1/L2 mobility command processing method provided by an embodiment of the present disclosure.
FIG. 2 is a flow chart of an L1/L2 mobility command processing method provided by an embodiment of the present disclosure.
FIG. 3 is a flow chart of an L1/L2 mobility command processing method provided by another embodiment of the present disclosure.
FIG. 4 is a structural diagram of a terminal provided by an embodiment of the present disclosure.
FIG. 5 is a structural diagram of a network device provided by an embodiment of the present disclosure.
FIG. 6 is a structural diagram of an L1/L2 mobility command processing apparatus provided by an embodiment of the present disclosure.
FIG. 7 is a structural diagram of an L1/L2 mobility command processing apparatus provided by another embodiment of the present disclosure.

### DESCRIPTION OF EMBODIMENTS

The term "and/or" in the present disclosure describes an association relationship between associated objects, which means that there can be three kinds of relationships, for example, A and/or B can mean these three cases where A exists alone, both A and B exist, and B exists alone. The character "/" generally indicates that the associated objects before and after are in an "or" relationship.

The term "a plurality of" in the embodiments of the present disclosure refers to two or more than two, and other quantifiers are similar thereto.

In the feMIMO (Further Enhanced MIMO, further enhanced MIMO) project of the R17 Standard, the ICBM (Inter-cell beam management, inter-cell beam management) mechanism is discussed, a basic procedure of which is that a network device sends a candidate TRP (Transmission and Reception Point, transmission and reception point) and its beam measurement configuration information to a terminal (Use Equipment, UE); after receiving the configuration information, the UE performs corresponding L1 (Layer 1, Layer 1) measurement according to the configuration information and reports a measurement result to the network device; the network device finds that the signal quality of the current TRP is poor through the L1 measurement result reported by the UE, and the network device sends an L1/L2 instruction to the UE to change to a TRP with better signal quality to continue data transmission, but the serving cell remains the same. In an NR mobility project of R18, it is hoped that the scenario of changing the service cell is considered based on the R17 ICBM.

The NR mobility project of the R18 may discuss the scenario of L1/L2 mobility with serving cell change (L1/L2 mobility with serving cell change). The L1/L2 mobility command is sent to a UE through a physical layer and/or an MAC layer at the network side. When the UE receives the L1/L2 mobility command, how to deal with the command and what the specific UE behavior is are not clearly defined, which may lead to some failures and then cause the failure of L1/L2 mobility with serving cell change, thereby affecting the mobility performance.

In order to solve the technical problem mentioned above, an embodiment of the present disclosure provides an L1/L2 mobility command processing method, in which a terminal receives an L1/L2 mobility command sent by a network device, where the L1/L2 mobility command includes indication information of a target cell, and performs a preset operation according to the L1/L2 mobility command or after the terminal successfully executes the L1/L2 mobility command. By defining some specific behaviors of the terminal after receiving the L1/L2 mobility command, and executing one or more preset operations of these specific behaviors, the terminal can be prevented from not knowing how to respond to and process the L1/L2 mobility command, and the occurrence of some failures are avoided, thereby avoiding a failure of the L1/L2 mobility with serving cell change, and improving the mobility performance.

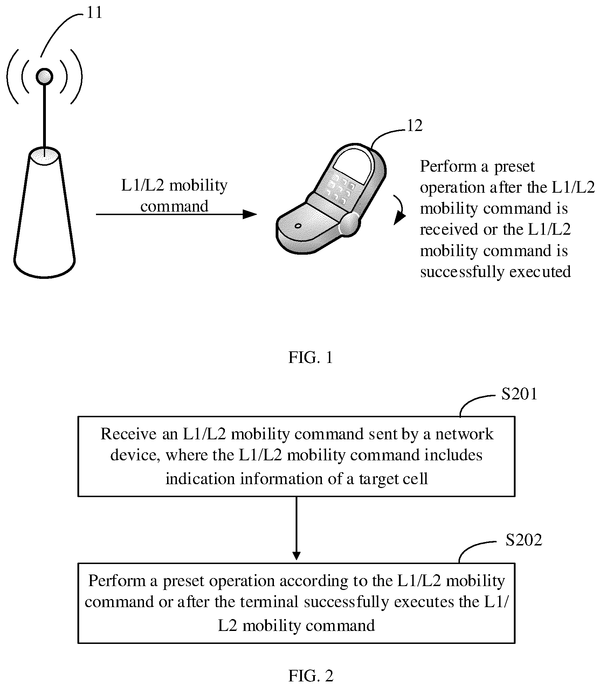

The L1/L2 mobility command processing method provided by the embodiment of the present disclosure is applicable to a system as shown in FIG. 1, which includes a network device and a terminal. The network device can transmit an L1/L2 mobility command to the terminal through L1 and/or L2, that is, through a physical layer and/or an MAC (Medium Access Control, medium access control) layer, where the L1/L2 mobility command can carry indication information of a target cell. The terminal can perform a preset operation after receiving the L1/L2 mobility command or after the terminal successfully executes the L1/L2 mobility command.

The technical solutions provided by the embodiments of the present disclosure can be applicable to a variety of systems, especially 5G systems. For example, applicable systems may be a global system of mobile communication (global system of mobile communication, GSM) system, a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile system (universal mobile telecommunication system, UMTS), a worldwide interoperability for microwave access (worldwide interoperability for microwave access, WiMAX) system, a 5G new radio (New Radio, NR) system, and so on. These various systems all include a terminal device and a network device. The system can further include a core network part, such as an evolved packet system (Evolved Packet System, EPS), a 5G system (5GS), or the like.

The terminal device involved in the embodiments of the present disclosure may refer to a device that provides voice and/or data connectivity to users, a handheld device with a wireless connection function, or other processing devices connected to a wireless modem, etc. In different systems, the name of the terminal device may be different. For example, in a 5G system, the terminal device may be called user equipment (User Equipment, UE). A wireless terminal device may communicate with one or more core networks (Core Networks, CNs) via a radio access network (Radio Access Network, RAN). The wireless terminal device may be a mobile terminal device such as a mobile phone (or called a "cellular" phone), and a computer with a mobile terminal device, for example, a portable, pocket-sized, handheld, computer built-in, or vehicle-mounted mobile device, which exchanges language and/or data with the radio access network. For example, a personal communication service (Personal Communications Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) or other devices. The wireless terminal device may also be called a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), and a user device (user device), which are not limited in the embodiments of the present disclosure.

The network device involved in the embodiments of the present disclosure may be a base station that may include a plurality of cells providing services to the terminal. Depending on a specific application, the base station may also be called an access point, or a device in the access network that communicates with a wireless terminal device through one or more sectors over an air interface, or other names. The network device may be used to interchange a received air frame with an Internet protocol (Internet Protocol, IP) packet, and may act as a router between the wireless terminal device and the rest of the access network, where the rest of the access network may include an Internet protocol (IP) communication network. The network device may also coordinate the management of attributes of the air interface. For example, the network device involved in the embodiments of the present disclosure may be a network device (Base Transceiver Station, BTS) in a global system for mobile communications (Global System for Mobile communications, GSM) or a code division multiple access (Code Division Multiple Access, CDMA), or a network device (NodeB) in a wide-band code division multiple access (Wide-band Code Division Multiple Access, WCDMA), or an evolved network device (evolutional Node B, eNB or e-NodeB) in a long term evolution (long term evolution, LTE) system, a 5G base station (gNB) in the 5G network architecture (next generation system), or a home evolved Node B (Home evolved Node B, HeNB), a relay node (relay node), a femto (femto), a pico (pico), etc., which is not limited in the embodiments of the present disclosure. In some network structures, the network device may include a centralized unit (centralized unit, CU) node and a distributed unit (distributed unit, DU) node, and the centralized unit and the distributed unit may also be arranged geographically separately.

The technical solutions in the embodiments of the present disclosure will be described below clearly and completely in conjunction with the accompanying drawings in the embodiments of the present disclosure. Obviously, the described embodiments are part of the embodiments of the present disclosure, rather than all of the embodiments. Based on the embodiments in the present disclosure, all other embodiments obtained by those of ordinary skill in the art without creative work shall fall within the protection scope of the present disclosure.

The methods and the apparatuses are based on the same application concept. Since the methods and the apparatuses solve the problem with similar principles, reference can be made to each other for the implementation of the apparatuses and the methods, and the repetition will not be elaborated.

FIG. 2 is a flow chart of an L1/L2 mobility command processing method provided by this embodiment. As shown in FIG. 2, this embodiment provides an L1/L2 mobility command processing method, the execution subject of which is a terminal, and the method has specific steps as follows.

S201, receive an L1/L2 mobility command sent by a network device, where the L1/L2 mobility command includes indication information of a target cell.

In this embodiment, in a scenario of L1/L2 mobility with serving cell change (L1/L2 mobility with serving cell change), the network device can send the L1/L2 mobility command to the terminal. Optionally, the L1/L2 mobility command may be transmitted to the terminal via L1 and/or L2, that is, via a physical layer and/or an MAC (Medium Access Control, medium access control) layer, where the L1/L2 mobility command may carry the indication information of the target cell.

S202, perform a preset operation according to the L1/L2 mobility command or after the terminal successfully executes the L1/L2 mobility command.

In this embodiment, after receiving the L1/L2 mobility command or successfully executing the L1/L2 mobility command, the terminal can perform the preset operation, where which preset operation is performed specifically can be agreed upon in advance, or a suitable preset operation can be selected according to a specific situation, to prevent the terminal from not knowing how to process it and resulting in the failure of the L1/L2 mobility with servicing cell change.

Optionally, the performing the preset operation may specifically include, if there is no conflict, one or more of the following operations:
- applying the configuration information of the target cell in configuration information of candidate cells; where optionally, the configuration information of the candidate cells may be configuration information of the candidate cells related to L1/L2 mobility preconfigured by the network device or the configuration information of the candidate cells preconfigured by other means; of course, the configuration information of the candidate cells may include configuration information of a plurality of candidate cells (which includes the configuration information of the target cell), or the configuration information of the target cell only; where beam switch or serving cell can be achieved by applying the configuration information of the target cell in the configuration information of the candidate cells;
- performing inter-layer transmission of a notification of beam switch or serving cell change; that is, since the terminal may receive the L1/L2 mobility command via the physical layer and/or the MAC (Medium Access Control, medium access control) layer, it may send, according to the L1/L2 mobility command, the notification of beam switch or serving cell change to other layers, to enable other layers to perform a specific operation according to the notification of beam switch or serving cell change;
- performing a specific operation corresponding to a type of the configuration information of the candidate cells; that is, when a serving cell changes, if the target cell spans across a distribution unit DU (inter-DU), one or more specific operations in an inter-DU scenario need to be performed, for example, resetting an MAC entity, re-establishing an RLC entity, and a PDCP recovery process, and so on; if the target cell spans across a central unit CU (inter-CU), one or more specific operations in an inter-CU scenario need to be performed, for example, resetting an MAC entity, re-establishing an RLC entity, and re-establishing a PDCP entity;

- making a change to HARQ (Hybrid Automatic Repeat reQuest, hybrid automatic repeat request); that is, L1/L2 mobility may have an impact on the MAC layer, and therefore a change can be made to the HARQ;
- applying system information of the target cell and maintaining updating of the system information, to enable the terminal to know how the target cell is configured and can subsequently access the target cell and work normally in the target cell;
- maintaining paging of the target cell, to enable the terminal to receive paging information from the network in the target cell;
- resetting, if the target cell is a SpCell (Special Cell, special cell), an RLM (Radio Link Monitoring, radio link monitoring) configuration parameter; where optionally, the RLM configuration parameter includes an RLM-related timer and counter, such as T310, N310, N311 parameters, etc.;
- applying, if the target cell is a SpCell, an RLM configuration parameter of the target cell; where optionally, the RLM configuration parameter includes an RLM-related timer and counter, such as T310, N310, N311 parameters, etc.;
- stopping a BFD (Beam Failure Detection, beam failure detection) and/or RLM process for a source cell;
- enabling a BFD and/or RLM process for the target cell.

It should be noted that there is no restriction on the execution order of the operations mentioned above.

In the embodiment, when applying the configuration information of the target cell in the configuration information of the candidate cells, according to specifically a type of configuration information of a candidate cell included in the configuration information of the candidate cells, the following corresponding operations may be taken:
- if the configuration information of the candidate cells is a first type of configuration information of the candidate cells including configuration information of a physical layer of each candidate cell, then configuration information of a physical layer of the target cell in the configuration information of the candidate cells may be applied; or
- if the configuration information of the candidate cells is a second type of configuration information of the candidate cells including configuration information of a physical layer, an MAC layer and an RLC (Radio Link Control, radio link control) layer of each candidate cell, then configuration information of a physical layer, an MAC layer and an RLC layer of the target cell in the configuration information of the candidate cells may be applied; or
- if the configuration information of the candidate cells is a third type of configuration information of the candidate cells including configuration information of a physical layer, an MAC layer, an RLC layer and a PDCP (Packet Data Convergence Protocol, packet data convergence protocol) layer of each candidate cell, then configuration information of a physical layer, an MAC layer, an RLC layer and a PDCP layer of the target cell in the configuration information of the candidate cells may be applied.

The configuration information of the candidate cells can be preconfigured by the network device, and the network device can send it to the terminal through an RRC (Radio Resource Control, radio resource control) message. The RRC message may include but is not limited to at least one of the following: an RRC reconfiguration message, an RRC connection resume message, an RRC connection setup message, and RRC connection reestablishment message. Of course, the configuration information of the candidate cells may also be preconfigured by other means.

On the basis of any of the embodiments mentioned above, optionally, the applying the configuration information of the target cell in the configuration information of the candidate cells can specifically include:
- directly applying the configuration information of the target cell in the configuration information of the candidate cells through an RRC layer; that is, the process of applying the RRC layer signaling may be applying configuration information corresponding to each layer in the configuration information of the target cell; or
- sending indication information to a lower layer through the RRC layer, where the indication information is used to enable the lower layer to apply, according to the indication information, configuration information of a corresponding layer of the target cell in the configuration information of the candidate cells; that is, the RRC layer can notify each layer to apply the configuration information corresponding to each layer in the configuration information of the target cell; or
- applying, after receiving the inter-layer transmitted notification of beam switch or serving cell change transmitted by other layers, configuration information of a corresponding layer of the target cell in the configuration information of the candidate cells; that is, inter-layer transmission of the notification of beam switch or serving cell change can be performed, a layer that receives the notification of beam switch or serving cell change can apply configuration information corresponding to that layer in the configuration information of the target cell.

In the embodiment, the performing the inter-layer transmission of the notification of beam switch or serving cell change can specifically include:
- transmitting the notification of beam switch or serving cell change from a layer that receives the L1/L2 mobility command to other layers; that is, if the L1/L2 mobility command may be received by a physical layer of the terminal, the notification of beam switch or serving cell change can be transmitted by the physical layer to other layers; if the L1/L2 mobility command may be received by an MAC layer of the terminal, the notification of beam switch or serving cell change can be transmitted by the MAC layer to other layers; and/or
- transmitting the notification of beam switch or serving cell change from a layer that receives the notification of beam switch or serving cell change to other layers; that is, any layer, after receiving the notification of beam switch or serving cell change, can also transmit the notification of beam switch or serving cell change to other layers.

It should be noted that when any layer transmits the notification of beam switch or serving cell change to other layers, it can transmit to an adjacent layer, for example, a physical layer notifies an MAC layer, the MAC layer notifies an RLC layer, the RLC layer notifies a PDCP layer, and the PDCP layer notifies an RRC layer; or it can also transmit across a layer, for example, a physical layer notifies an RRC layer, or an MAC layer notifies an RRC layer.

In the embodiment, when the serving cell changes, due to different scenarios, such as involving an inter-DU scenario or an inter-CU scenario, it is necessary to perform a corresponding specific operation, which may specifically include:
if the configuration information of the candidate cells is a second type of configuration information of the candidate cells, where the second type of the configuration information of the candidate cells includes configuration information of a physical layer, an MAC layer and an RLC layer of each candidate cell, that is, involving the inter-DU scenario, one or more of the following specific operations corresponding to the inter-DU scenario may be performed:
   - resetting an MAC entity; that is, re-enabling a timer related to the MAC entity or resetting an MAC-related counter, etc.;
   - re-establishing an RLC entity; that is, re-enabling a timer related to the RLC entity or resetting an RLC-related counter, etc.; and
   - performing a PDCP recovery process; that is, PDCP data recovery can be performed without re-establishing the PDCP entity;
if the configuration information of the candidate cells is a third type of configuration information of the candidate cells, where the third type of the configuration information of the candidate cells includes configuration information of a physical layer, an MAC layer, an RLC layer and a PDCP layer of each candidate cell, that is, involving the inter-CU scenario, one or more of the following specific operations corresponding to the inter-CU scenario may be performed:
   - resetting an MAC entity; that is, re-enabling a timer related to the MAC entity or resetting an MAC-related counter, etc.;
   - re-establishing an RLC entity; that is, re-enabling a timer related to the RLC entity or resetting an RLC-related counter, etc.; and
   - re-establishing a PDCP entity; that is, re-enabling a timer related to the PDCP entity or resetting a PDCP-related counter, etc..

On the basis of any of the embodiments mentioned above, the pre-configured configuration information of the candidate cells related to L1/L2 mobility includes at least two different types of configuration information of the candidate cells, for example, including the first type of the configuration information of the candidate cells and the second type of the configuration information of the candidate cells, that is, including a set of configuration information of a physical layer of each candidate cell, and a set of configuration information of a physical layer, an MAC layer and an RLC layer of each candidate cell; for another example, including the first type of the configuration information of the candidate cells and the third type of the configuration information of the candidate cells, that is, including a set of configuration information of a physical layer of each candidate cell, and a set of configuration information of a physical layer, an MAC layer, an RLC layer and a PDCP layer of each candidate cell; for further example, including the second type of the configuration information of the candidate cells and the third type of the configuration information of the candidate cells; for a yet example, including the first type of the configuration information of the candidate cells, the second type of the configuration information of the candidate cells, and the third type of the configuration information of the candidate cells.

Furthermore, in the embodiment, before the applying the configuration information of the target cell in the configuration information of the candidate cells, the method further includes:
receiving indication information sent by the network device, where the indication information is used to indicate a type of the configuration information of the target cell that the terminal needs to apply; determining the type of the configuration information of the target cell according to the indication information, and further applying the configuration information of the target cell corresponding to the determined type of configuration information of the target cell to perform a preset operation corresponding to the type of the configuration information of the target cell; or
the terminal also being capable to voluntarily determine the type of the configuration information of the target cell that the terminal needs to apply.

Optionally, the network device can determine the type of the configuration information of the target cell according to the following principles and send corresponding indication information to the terminal, or the terminal can also voluntarily determine the type of the configuration information of the target cell according to the following principles:
if it is determined that the target cell does not span across a DU (Distributed Unit, distributed unit), selecting and determining a first type of configuration information of the candidate cells as the type of the configuration information of the target cell, where the first type of the configuration information of the candidate cells includes configuration information of a physical layer; or
if it is determined that the target cell spans across a DU, selecting and determining a second type of configuration information of the candidate cells as the type of the configuration information of the target cell, where the second type of the configuration information of the candidate cells includes configuration information of a physical layer, an MAC layer and an RLC layer; or
if it is determined that the target cell spans across a CU (Centralized Unit, centralized unit), selecting and determining a third type of configuration information of the candidate cells as the type of the configuration information of the target cell, where the third type of the configuration information of the candidate cells includes configuration information of a physical layer, an MAC layer, an RLC layer and a PDCP layer.

In the L1/L2 mobility command processing method provided by the embodiment mentioned above, a terminal receives an L1/L2 mobility command sent by a network device, where the L1/L2 mobility command includes indication information of a target cell, and performs a preset operation according to the L1/L2 mobility command or after the terminal successfully executes the L1/L2 mobility command. The embodiment defines some specific behaviors of the terminal after receiving the L1/L2 mobility command, which prevents the terminal from not knowing how to respond to and process the L1/L2 mobility command, prevents some failures from occurring, thereby avoiding a failure of the L1/L2 mobility with serving cell change, and improving the mobility performance.

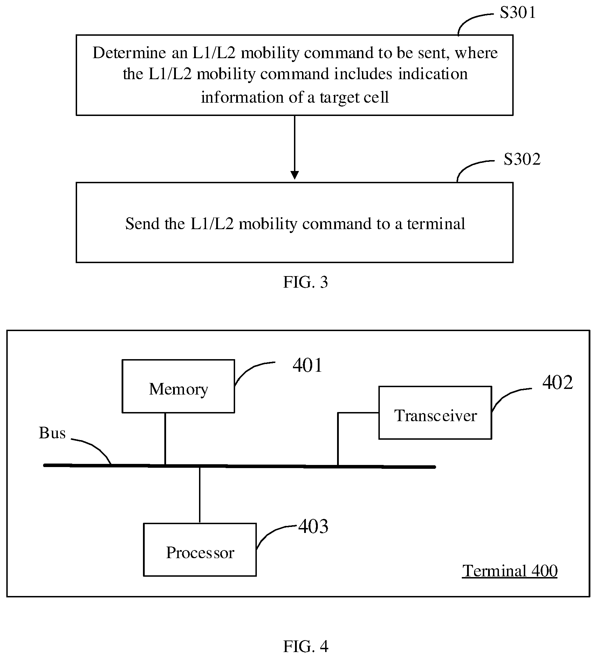

FIG. 3 is a flow chart of an L1/L2 mobility command processing method provided by this embodiment. As shown in FIG. 3, this embodiment provides an L1/L2 mobility command processing method, the execution subject of which is a network device, and the method has the specific steps as follows.

S301, determine an L1/L2 mobility command to be sent, where the L1/L2 mobility command includes indication information of a target cell.

S302, send the L1/L2 mobility command to a terminal.

In this embodiment, after determining the L1/L2 mobility command to be sent, the network device can transmit the L1/L2 mobility command to the terminal via L1 and/or L2, that is, via a physical layer and/or an MAC layer, where the L1/L2 mobility command can carry the indication information of the target cell. This embodiment is an embodiment of the network device side corresponding to the embodiment described above, the specific principles and technical effects of which can refer to the embodiment described above and will not be elaborated here.

On the basis of the embodiment mentioned above, before the sending the L1/L2 mobility command to the terminal, the method further includes:
sending pre-configured configuration information of candidate cells related to L1/L2 mobility to the terminal.

On the basis of the embodiment mentioned above, the configuration information of the candidate cells includes at least one piece of the following configuration information:
a first type of configuration information of the candidate cells, including configuration information of a physical layer of each candidate cell;
a second type of configuration information of the candidate cells, including configuration information of a physical layer, an MAC layer and a radio link control RLC layer of each candidate cell; and
a third type of configuration information of the candidate cells, including configuration information of a physical layer, an MAC layer, an RLC layer and a PDCP layer of each candidate cell.

On the basis of the embodiment mentioned above, if the pre-configured configuration information of the candidate cells includes at least two different types of configuration information of the candidate cells, the method further includes:
sending indication information to the terminal, where the indication information is used to indicate a type of configuration information of the target cell that the terminal needs to apply.

In this embodiment, optionally, the network device can determine the type of the configuration information of the target cell according to the following principles, and send corresponding indication information to the terminal:
if it is determined that the target cell does not span across a DU, selecting and determining a first type of configuration information of the candidate cells as the type of the configuration information of the target cell, where the first type of the configuration information of the candidate cells includes configuration information of a physical layer; or
if it is determined that the target cell spans across a DU, selecting and determining a second type of configuration information of the candidate cells as the type of the configuration information of the target cell, where the second type of the configuration information of the candidate cells includes configuration information of a physical layer, an MAC layer and an RLC layer; or
if it is determined that the target spans across a CU, selecting and determining a third type of configuration information of the candidate cells as the type of the configuration information of the target cell, where the third type of the configuration information of the candidate cells includes configuration information of a physical layer, an MAC layer, an RLC layer and a PDCP layer.

In order to further introduce the L1/L2 mobility command processing method, the embodiment of the present disclosure also provides the following examples for detailed illustration.

### Example 1

In this example, pre-configured configuration information of a target cell only includes configuration information of a physical layer, and an L1/L2 mobility command is sent through the physical layer (intra-DU scenario).

Step 1: a UE receives an L1 mobility command sent by a network device through the physical layer, and needs to perform L1 mobility and also needs to perform serving cell change; and/or,
the UE successfully completes the L1 mobility; at that time the UE has received configuration information of candidate cells sent by the network device.

Step 2: the physical layer of the UE performs one or more of the following behaviors:
- applying configuration information of the physical layer of the target cell, where the configuration information of the physical layer of the target cell is configured by the network device for the UE through an RRC signaling, and is used to enable the UE to directly apply this configuration information when the UE receives the L1 mobility command sent by the network device;
- notifying a higher layer (MAC layer) of occurrence of beam switch (beam switch) and/or cell change, which is performed mainly because that L1 mobility may affect the higher layer (MAC layer), the higher layer (MAC layer) needs to be notified;
- notifying a higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 3: if the higher layer (MAC layer) receives an indication of beam switch and/or cell change sent by a lower layer (physical layer), it performs one or more of the following behaviors:
- making some changes to HARQ (impact on MAC due to L1 mobility);
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 4: if the higher layer (RRC layer) receives the indication of beam switch and/or cell change from the lower layer (physical layer and/or MAC layer), it performs one or more of the following behaviors:
- applying system information of the target cell and maintaining updating of the system information;
- maintaining paging of the target cell;
- for the target cell being a SpCell, resetting an RLM configuration parameter; where optionally, the RLM configuration parameter includes an RLM-related timer and counter, such as T310, N310, and N311 parameters;
- for the target cell being a SpCell, applying an RLM configuration parameter of the target cell; where optionally, the RLM configuration parameter includes an RLM-related timer and counter, such as T310, N310, and N311 parameters;
- if the lower layer (physical layer and/or MAC layer) directly notifies the higher layer (RRC layer) of occurrence of beam switch and/or cell change, the higher layer (RRC layer) applies the configuration information of the target cell, and configuration information of the corresponding physical layer is applied in an RRC signaling application process;
- notifying the lower layer (physical layer) to apply the configuration information of the physical layer of the target cell;
- notifying the lower layer (MAC layer) of occurrence of beam switch and/or cell change, which is performed mainly because that L1 mobility may affect the lower layer (MAC layer), the lower layer (MAC layer) needs to be notified.

Step 5: if the lower layer (physical layer) receives indication information sent by the higher layer (RRC layer), the lower layer (physical layer) applies the configuration information of the physical layer of the target cell.

Step 6: the UE stops a BFD/RLM process for a source cell, where the stopping time can be as follows: the UE immediately stops the BFD/RLM process when it receives the L1 mobility command sent by the network device, stops the BFD/RLM process when it starts to perform L1 mobility after a period of time (beamAppTime), stops the BFD/RLM process when it completes L1 mobility, or stops the BFD/RLM process when it completes serving cell change.

Step 7: the UE enables a BFD/RLM process of the target cell, where the enabling time may be as follows: the UE immediately enables the BFD/RLM process when it receives the L1 mobility command sent by the network device, enables the BFD/RLM process when it starts to perform L1 mobility after a period of time (beamAppTime), enables the BFD/RLM process when it completes L1 mobility, or enables the BFD/RLM process when it completes serving cell change.

It should be noted that the order of execution of the steps is not limited in this example, and they can be executed in any order without conflict therebetween; there is no restriction on the execution order of various optional behaviors of each step, and various optional behaviors of different steps can be arbitrarily combined, or some steps can be executed or not. For example, if applying the configuration information of the physical layer of the target cell is performed in step 3, step 5 may not be executed; or if applying the configuration information of the physical layer of the target cell is not performed in step 3, step 5 may be executed to apply the configuration information of the physical layer of the target cell.

### Example 2

In this example, pre-configured configuration information of a target cell only includes configuration information of a physical layer, and an L1/L2 mobility command is sent through an MAC layer (intra-DU scenario).

Step 1: a UE receives an L2 mobility command, and it needs to perform L2 mobility and also needs to perform serving cell change; and/or,
the UE successfully completes the L2 mobility; at that time the UE has received configuration information of candidate cells sent by the network device.

Step 2: the MAC layer of the UE performs one or more of the following behaviors:
- indicate to a lower layer (physical layer) occurrence of beam switch and/or cell change;
- making some changes to HARQ (impact on MAC due to L2 mobility);
- notifying a higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 3: after receiving an indication sent by a higher layer (MAC layer), the lower layer (physical layer) performs one or more of the following behaviors:
- applying configuration information of the physical layer of the target cell, where the configuration information of the physical layer of the target cell is configured by the network device for the UE through an RRC signaling, and is used to enable the UE to directly apply this configuration information when the UE receives the L2 mobility command;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 4: if the higher layer (RRC layer) receives the indication of beam switch and/or cell change from the lower layer (physical layer and/or MAC layer), it performs one or more of the following behaviors:
- applying system information of the target cell and maintaining updating of the system information;
- maintaining paging of the target cell;
- for the target cell being a SpCell, resetting an RLM configuration parameter; where optionally, the RLM configuration parameter includes an RLM-related timer and counter, such as T310, N310, and N311 parameters;
- for the target cell being a SpCell, applying an RLM configuration parameter of the target cell; where optionally, the RLM configuration parameter includes an RLM-related timer and counter, such as T310, N310, and N311 parameters;
- if the lower layer (physical layer and/or MAC layer) directly notifies the higher layer (RRC layer) of occurrence of beam switch and/or cell change, the higher layer (RRC layer) applies the configuration information of the target cell, and configuration information of the corresponding physical layer is applied in an RRC signaling application process;
- notifying the lower layer (physical layer) to apply the configuration information of the physical layer of the target cell;
- notifying the lower layer (physical layer) of occurrence of beam switch and/or cell change.

Step 5: if the lower layer (physical layer) receives indication information sent by the higher layer (RRC layer), the lower layer (physical layer) applies the configuration information of the physical layer of the target cell.

Step 6: the UE stops a BFD/RLM process for a source cell, where the stopping time can be as follows: the UE immediately stops the BFD/RLM process when it receives the L2 mobility command sent by the network device, stops the BFD/RLM process when it starts to perform L2 mobility after a period of time (beamAppTime), stops the BFD/RLM process when it completes L2 mobility, or stops the BFD/RLM process when it completes serving cell change.

Step 7: the UE enables a BFD/RLM process of the target cell, where the enabling time may be as follows: the UE immediately enables the BFD/RLM process when it receives the L2 mobility command sent by the network device, enables the BFD/RLM process when it starts to perform L2 mobility after a period of time (beamAppTime), enables the BFD/RLM process when it completes L2 mobility, or enables the BFD/RLM process when it completes serving cell change.

It should be noted that the order of execution of the steps is not limited in this example, and they can be executed in any order without conflict therebetween; there is no restriction on the execution order of various optional behaviors of each step, and various optional behaviors of different steps can be arbitrarily combined, or some steps can be executed or not.

### Example 3

In this example, pre-configured configuration information of a target cell includes a configuration of a physical layer, an MAC layer, and an RLC layer, and an L1/L2 mobility command is sent by the physical layer (inter-DU scenario).

Step 1: a UE receives an L1 mobility command, and needs to perform L1 mobility and also needs to perform serving cell change; and/or,
the UE successfully completes the L1 mobility; at that time the UE has received configuration information of candidate cells sent by the network device.

Step 2: the physical layer of the UE performs one or more of the following behaviors:
- applying configuration information of the physical layer of the target cell, where the configuration information of the physical layer of the target cell is configured by the network device for the UE through an RRC signaling, and is used to enable the UE to directly apply this configuration information when the UE receives the L1 mobility command sent by the network device;
- notifying a higher layer (MAC layer) of occurrence of beam switch and/or cell change, which is performed mainly because that L1 mobility may affect the higher layer (MAC layer) and the parameter of the higher layer (MAC layer) needs to be updated, the higher layer (MAC layer) needs to be notified;
- notifying a high layer (RLC layer) of occurrence of beam switch and/or cell change, which is performed mainly because that L1 mobility updates the configuration of the higher layer (RLC layer), the higher layer (RLC layer) needs to be notified;
- notifying a higher layer (PDCP layer) of occurrence of beam switch and/or cell change, which is performed mainly because that L1 mobility may affect the higher layer (PDCP layer), the higher layer (PDCP layer) needs to be notified;
- notifying a higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 3: if the MAC layer receives an indication of beam switch and/or cell change sent from other layers, it performs one or more of the following behaviors:
- resetting an MAC entity;
- applying the configuration information of the MAC layer of the target cell;
- making some changes to HARQ (impact on MAC due to L1 mobility);
- notifying the high layer (RLC layer) of occurrence of beam switch and/or cell change, which is performed mainly because that L1 mobility updates the configuration of the higher layer (RLC layer), the higher layer (RLC layer) needs to be notified;
- notifying the higher layer (PDCP layer) of occurrence of beam switch and/or cell change, which is performed mainly because that L1 mobility may affect the higher layer (PDCP layer), the higher layer (PDCP layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 4: if the RLC layer receives the indication of beam switch and/or cell change sent from other layers, it performs one or more of the following behaviors:
- re-establishing an RLC entity;
- applying the configuration information of the RLC layer of the target cell;
- notifying a lower layer (MAC layer) of occurrence of beam switch and/or cell change, which is performed mainly because that L1 mobility may affect the lower layer (MAC layer) and the parameter of the lower layer (MAC layer) needs to be updated, the lower layer (MAC layer) needs to be notified;

- notifying the higher layer (PDCP layer) of occurrence of beam switch and/or cell change, which is performed mainly because that L1 mobility may affect the higher layer (PDCP layer), the higher layer (PDCP layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 5: if the PDCP layer receives the indication of beam switch and/or cell change sent from other layers, it performs one or more of the following behaviors:
- performing PDCP recovery;
- notifying the lower layer (MAC layer) of occurrence of beam switch and/or cell change, which is performed mainly because that L1 mobility may affect the lower layer (MAC layer) and the parameter of the lower layer (MAC layer) needs to be updated, the lower layer (MAC layer) needs to be notified;
- notifying the lower layer (RLC layer) of occurrence of beam switch and/or cell change, which is performed mainly because that L1 mobility updates the configuration of the lower layer (RLC layer), the lower layer (RLC layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 6: if the higher layer (RRC layer) receives the indication of beam switch and/or cell change from the lower layer (physical layer, MAC layer, RLC layer, or PDCP layer), it performs one or more of the following behaviors:
- applying system information of the target cell and maintaining updating of the system information;
- maintaining paging of the target cell;
- for the target cell being a SpCell, resetting an RLM configuration parameter; where optionally, the RLM configuration parameter includes an RLM-related timer and counter, such as T310, N310, and N311 parameters;
- for the target cell being a SpCell, applying an RLM configuration parameter of the target cell; where optionally, the RLM configuration parameter includes an RLM-related timer and counter, such as T310, N310, and N311 parameters;
- if the lower layer (physical layer, MAC layer, RLC layer, or PDCP layer) directly notifies the higher layer (RRC layer) of occurrence directly notifies the higher layer (RRC layer) of occurrence of, the higher layer (RRC layer) applies the configuration information of the target cell, and configuration information of the corresponding physical layer, MAC layer, or RLC layer are applied in an RRC signaling application process;
- notifying the lower layer (physical layer) to apply the configuration information of the physical layer of the target cell;
- notifying the lower layer (MAC layer) to apply the configuration information of the MAC layer of the target cell;
- notifying the lower layer (RLC layer) to apply the configuration information of the RLC layer of the target cell;
- notifying the lower layer (MAC layer) of occurrence of beam switch and/or cell change, which is performed mainly because that L1 mobility may affect the lower layer (MAC layer) and the parameter of the lower layer (MAC layer) needs to be updated, the lower layer (MAC layer) needs to be notified;
- notifying the lower layer (RLC layer) of occurrence of beam switch and/or cell change, which is performed mainly because that L1 mobility updates the configuration of the lower layer (RLC layer), the lower layer (RLC layer) needs to be notified;
- notifying the lower layer (PDCP layer) of occurrence of beam switch and/or cell change, which is performed mainly because that L1 mobility may affect the lower layer (PDCP layer), and the lower layer (PDCP layer) needs to be notified.

Step 7: if the lower layer (physical layer, MAC layer, or RLC layer) receives indication information sent from the higher layer (RRC layer), the lower layer (physical layer, MAC layer, or RLC layer) applies the configuration information of the corresponding layer of the target cell.

Step 8: the UE stops a BFD/RLM process for a source cell, where the stopping time can be as follows: the UE immediately stops the BFD/RLM process when it receives the L1 mobility command sent by the network device, stops the BFD/RLM process when it starts to perform L1 mobility after a period of time (beamAppTime), stops the BFD/RLM process when it completes L1 mobility, or stops the BFD/RLM process when it completes serving cell change.

Step 9: the UE enables a BFD/RLM process of the target cell, where the enabling time may be as follows: the UE immediately enables the BFD/RLM process when it receives the L1 mobility command sent by the network device, enables the BFD/RLM process when it starts to perform L1 mobility after a period of time (beamAppTime), enables the BFD/RLM process when it completes L1 mobility, or enables the BFD/RLM process when it completes serving cell change.

It should be noted that the order of execution of the steps is not limited in this example, and they can be executed in any order without conflict therebetween; there is no restriction on the execution order of various optional behaviors of each step, and various optional behaviors of different steps can be arbitrarily combined, or some steps can be executed or not.

### Example 4

In this example, pre-configured configuration information of candidate cells includes configuration information of a physical layer, an MAC layer, and an RLC layer, and an L1/L2 mobility command is sent from the MAC layer (inter-DU scenario).

Step 1: a UE receives an L2 mobility command, and it needs to perform L2 mobility and also needs to perform serving cell change; and/or,
the UE successfully completes the L2 mobility; at that time the UE has received the configuration information of the candidate cells sent by the network device.

Step 2: the MAC layer of the UE performs one or more of the following behaviors:
- indicate to a lower layer (physical layer) occurrence of beam switch and/or cell change;
- resetting an MAC entity;
- applying the configuration information of an MAC layer of a target cell;
- making some changes to HARQ (impact on MAC due to L2 mobility);
- notifying a high layer (RLC layer) of occurrence of beam switch and/or cell change, which is performed mainly because that L2 mobility updates the configuration of the higher layer (RLC layer), the higher layer (RLC layer) needs to be notified;
- notifying a higher layer (PDCP layer) of occurrence of beam switch and/or cell change, which is performed mainly because that L2 mobility may affect the higher layer (PDCP layer), the higher layer (PDCP layer) needs to be notified;
- notifying a higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 3: the lower layer (physical layer) receives an indication of beam switch and/or cell change sent from other layers, and it performs one or more of the following behaviors:
- applying configuration information of the physical layer of the target cell, where the configuration information of the physical layer of the target cell is configured by the network for the UE through an RRC signaling, and is used to enable the UE to directly apply this configuration information when the UE receives the L2 mobility command;
- notifying the higher layer (RLC layer) of occurrence of beam switch and/or cell change, which is performed mainly because that L2 mobility updates the configuration of the higher layer (RLC layer), the higher layer (RLC layer) needs to be notified;
- notifying the higher layer (PDCP layer) of occurrence of beam switch and/or cell change, which is performed mainly because that L2 mobility may affect the higher layer (PDCP layer), the higher layer (PDCP layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 4: if the RLC layer receives an indication of beam switch and/or cell change sent from other layers, it performs one or more of the following behaviors:
- re-establishing an RLC entity;
- applying the configuration of the RLC layer of the target cell;
- notifying the lower layer (physical layer) of occurrence of beam switch and/or cell change;
- notifying the higher layer (PDCP layer) of occurrence of beam switch and/or cell change, which is performed mainly because that L2 mobility may affect the higher layer (PDCP layer), the higher layer (PDCP layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 5: if the PDCP layer receives the indication of beam switch and/or cell change sent from other layers, it performs one or more of the following behaviors:
- performing a PDCP recovery process (PDCP recovery);
- notifying the lower layer (physical layer) of occurrence of beam switch and/or cell change;
- notifying the lower layer (RLC layer) of occurrence of beam switch and/or cell change, which is performed mainly because that L2 mobility updates the configuration of the lower layer (RLC layer), the lower layer (RLC layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 6: if the higher layer (RRC layer) receives the indication of beam switch and/or cell change from the lower layer (physical layer, MAC layer, RLC layer, or PDCP layer), it performs one or more of the following behaviors:
- applying system information of the target cell and maintaining updating of the system information;
- maintaining paging of the target cell;
- for the target cell being a SpCell, resetting an RLM configuration parameter; where optionally, the RLM configuration parameter includes an RLM-related timer and counter, such as T310, N310, and N311 parameters;
- for the target cell being a SpCell, applying an RLM configuration parameter of the target cell; where optionally, the RLM configuration parameter includes an RLM-related timer and counter, such as T310, N310, and N311 parameters;
- if the lower layer (physical layer, MAC layer, RLC layer, or PDCP layer) directly notifies the higher layer (RRC layer) of occurrence directly notifies the higher layer (RRC layer) of occurrence of, the higher layer (RRC layer) applies the configuration information of the target cell, and configuration information of the corresponding physical layer, MAC layer, or RLC layer are applied in an RRC signaling application process;
- notifying the lower layer (physical layer) to apply the configuration information of the physical layer of the target cell;
- notifying the lower layer (MAC layer) to apply the configuration information of the MAC layer of the target cell;
- notifying the lower layer (RLC layer) to apply the configuration information of the RLC layer of the target cell;
- notifying the lower layer (physical layer) of occurrence of beam switch and/or cell change;
- notifying the lower layer (RLC layer) of occurrence of beam switch and/or cell change, which is performed mainly because that L2 mobility updates the configuration of the lower layer (RLC layer), the lower layer (RLC layer) needs to be notified;
- notifying the lower layer (PDCP layer) of occurrence of beam switch and/or cell change, which is performed mainly because that L2 mobility may affect the lower layer (PDCP layer), and the lower layer (PDCP layer) needs to be notified.

Step 7: if the lower layer (physical layer, MAC layer, or RLC layer) receives indication information sent from the higher layer (RRC layer), the lower layer (physical layer, MAC layer, or RLC layer) applies the configuration information of the corresponding layer of the target cell.

Step 8: the UE stops a BFD/RLM process for a source cell, where the stopping time can be as follows: the UE immediately stops the BFD/RLM process when it receives the L2 mobility command sent by the network device, stops the BFD/RLM process when it starts to perform L2 mobility after a period of time (beamAppTime), stops the BFD/RLM process when it completes L2 mobility, or stops the BFD/RLM process when it completes serving cell change.

Step 9: the UE enables a BFD/RLM process of the target cell, where the enabling time may be as follows: the UE immediately enables the BFD/RLM process when it receives the L2 mobility command sent by the network device, enables the BFD/RLM process when it starts to perform L2 mobility after a period of time (beamAppTime), enables the BFD/RLM process when it completes L2 mobility, or enables the BFD/RLM process when it completes serving cell change.

It should be noted that the order of execution of the steps is not limited in this example, and they can be executed in any order without conflict therebetween; there is no restriction on the execution order of various optional behaviors of each step, and various optional behaviors of different steps can be arbitrarily combined, or some steps can be executed or not.

Example 5: pre-configured configuration information of candidate cells includes a configuration of a physical layer, an MAC layer, an RLC layer, and a PDCP layer, and an L1/L2 mobility command is sent from the physical layer (inter-CU scenario).

Step 1: a UE receives an L1 mobility command, and it needs to perform L1 mobility and also needs to perform serving cell change; and/or,
the UE successfully completes the L1 mobility; at that time the UE has received the configuration information of the candidate cells sent by the network device.

Step 2: the physical layer of the UE performs one or more of the following behaviors:
- applying configuration information of a physical layer of a target cell, where the configuration information of the physical layer of the target cell is configured by the network for the UE through an RRC signaling, and is used to enable the UE to directly apply this configuration information when the UE receives the L1 mobility command sent by the network device;
- notifying a higher layer (MAC layer) of occurrence of beam switch and/or cell change, which is performed mainly because that L1 mobility may affect the higher layer (MAC layer) and the parameter of the higher layer (MAC layer) needs to be updated, the higher layer (MAC layer) needs to be notified;
- notifying a high layer (RLC layer) of occurrence of beam switch and/or cell change, which is performed mainly because that L1 mobility updates the configuration of the higher layer (RLC layer), the higher layer (RLC layer) needs to be notified;
- notifying a higher layer (PDCP layer) of occurrence of beam switch and/or cell change, which is performed mainly because that the L1 mobility updates the configuration of the higher layer (PDCP layer), the higher layer (PDCP layer) needs to be notified;
- notifying a higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 3: if the MAC layer receives an indication of beam switch and/or cell change sent from other layers, it performs one or more of the following behaviors:
- resetting an MAC entity;
- applying the configuration information of the MAC layer of the target cell;
- making some changes to HARQ (impact on MAC due to L1 mobility);
- notifying the high layer (RLC layer) of occurrence of beam switch and/or cell change, which is performed mainly because that L1 mobility updates the configuration of the higher layer (RLC layer), the higher layer (RLC layer) needs to be notified;
- notifying the higher layer (PDCP layer) of occurrence of beam switch and/or cell change, which is performed mainly because that the L1 mobility updates the configuration of the higher layer (PDCP layer), the higher layer (PDCP layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 4: if the RLC layer receives the indication of beam switch and/or cell change sent from other layers, it performs one or more of the following behaviors:
- re-establishing an RLC entity;
- applying the configuration information of the RLC layer of the target cell;
- notifying a lower layer (MAC layer) of occurrence of beam switch and/or cell change, which is performed mainly because that L1 mobility may affect the lower layer (MAC layer) and the parameter of the lower layer (MAC layer) needs to be updated, the lower layer (MAC layer) needs to be notified;
- notifying the higher layer (PDCP layer) of occurrence of beam switch and/or cell change, which is performed mainly because that the L1 mobility updates the configuration of the higher layer (PDCP layer), the higher layer (PDCP layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 5: if the PDCP layer receives the indication of beam switch and/or cell change sent from other layers, it performs one or more of the following behaviors:
- re-establishing a PDCP entity;
- applying the configuration information of the PDCP layer of the target cell;
- notifying the lower layer (MAC layer) of occurrence of beam switch and/or cell change, which is performed mainly because that L1 mobility may affect the lower layer (MAC layer) and the parameter of the lower layer (MAC layer) needs to be updated, the lower layer (MAC layer) needs to be notified;
- notifying the lower layer (RLC layer) of occurrence of beam switch and/or cell change, which is performed mainly because that L1 mobility updates the configuration of the lower layer (RLC layer), the lower layer (RLC layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 6: if the higher layer (RRC layer) receives the indication of beam switch and/or cell change from the lower layer (physical layer, MAC layer, RLC layer, or PDCP layer), it performs one or more of the following behaviors:
- applying system information of the target cell and maintaining updating of the system information;
- maintaining paging of the target cell;
- for the target cell being a SpCell, resetting an RLM configuration parameter; where optionally, the RLM configuration parameter includes an RLM-related timer and counter, such as T310, N310, and N311 parameters;
- for the target cell being a SpCell, applying an RLM configuration parameter of the target cell; where optionally, the RLM configuration parameter includes an RLM-related timer and counter, such as T310, N310, and N311 parameters;
- if the lower layer (physical layer, MAC layer, RLC layer, or PDCP layer) directly notifies the higher layer (RRC layer) of occurrence of beam switch and/or cell change , the higher layer (RRC layer) applies the configuration of the target cell, and configuration information of the corresponding physical layer, MAC layer, RLC layer, or PDCP layer are applied in an RRC signaling application process;
- notifying the lower layer (physical layer) to apply the configuration information of the physical layer of the target cell;
- notifying the lower layer (MAC layer) to apply the configuration information of the MAC layer of the target cell;
- notifying the lower layer (RLC layer) to apply the configuration information of the RLC layer of the target cell;
- notifying the lower layer (PDCP layer) to apply the configuration information of the PDCP layer of the target cell;
- notifying the lower layer (MAC layer) of occurrence of beam switch and/or cell change, which is performed mainly because that L1 mobility may affect the lower layer (MAC layer) and the parameter of the lower layer (MAC layer) needs to be updated, the lower layer (MAC layer) needs to be notified;
- notifying the lower layer (RLC layer) of occurrence of beam switch and/or cell change, which is performed mainly because that L1 mobility updates the configuration of the lower layer (RLC layer), the lower layer (RLC layer) needs to be notified;
- notifying the lower layer (PDCP layer) of occurrence of beam switch and/or cell change, which is performed mainly because that L1 mobility updates the configuration of the lower layer (PDCP layer), the lower layer (PDCP layer) needs to be notified.

Step 7: if the lower layer (physical layer, MAC layer, RLC layer, or PDCP layer) receives the indication information sent from the higher layer (RRC layer), the lower layer (physical layer, MAC layer, RLC layer, or PDCP layer) applies the configuration information of the corresponding layer of the target cell.

Step 8: the UE stops a BFD/RLM process for a source cell, where the stopping time can be as follows: the UE immediately stops the BFD/RLM process when it receives the L1 mobility command sent by the network device, stops the BFD/RLM process when it starts to perform L1 mobility after a period of time (beamAppTime), stops the BFD/RLM process when it completes L1 mobility, or stops the BFD/RLM process when it completes serving cell change.

Step 9: the UE enables a BFD/RLM process of the target cell, where the enabling time may be as follows: the UE immediately enables the BFD/RLM process when it receives the L1 mobility command sent by the network device, enables the BFD/RLM process when it starts to perform L1 mobility after a period of time (beamAppTime), enables the BFD/RLM process when it completes L1 mobility, or enables the BFD/RLM process when it completes serving cell change.

It should be noted that the order of execution of the steps is not limited in this example, and they can be executed in any order without conflict therebetween; there is no restriction on the execution order of various optional behaviors of each step, and various optional behaviors of different steps can be arbitrarily combined, or some steps can be executed or not.

### Example 6

In this example, pre-configured configuration of candidate cells includes configuration information of a physical layer, an MAC layer, an RLC layer, and a PDCP layer, and an L1/L2 mobility command is sent from the MAC layer (inter-CU) scenario.

Step 1: a UE receives an L2 mobility command, and it needs to perform L2 mobility and also needs to perform serving cell change; and/or,
the UE successfully completes the L2 mobility; at that time the UE has received the configuration information of the candidate cells sent by the network device.

Step 2: the MAC layer of the UE performs one or more of the following behaviors:
- indicate to a lower layer (physical layer) occurrence of beam switch and/or cell change;
- resetting an MAC entity;
- applying the configuration information of an MAC layer of a target cell;
- making some changes to HARQ (impact on MAC due to L2 mobility);
- notifying a high layer (RLC layer) of occurrence of beam switch and/or cell change, which is performed mainly because that L2 mobility updates the configuration of the higher layer (RLC layer), the higher layer (RLC layer) needs to be notified;
- notifying a higher layer (PDCP layer) of occurrence of beam switch and/or cell change, which is performed mainly because that the L2 mobility updates the configuration of the higher layer (PDCP layer), the higher layer (PDCP layer) needs to be notified;
- notifying a higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 3: the lower layer (physical layer) receives an indication of beam switch and/or cell change sent from other layers, and it performs one or more of the following behaviors:
- applying configuration information of the physical layer of the target cell, where the configuration information of the physical layer of the target cell is configured by the network for the UE through an RRC signaling, and is used to enable the UE to directly apply this configuration information when the UE receives the L2 mobility command;
- notifying the higher layer (RLC layer) of occurrence of beam switch and/or cell change, which is performed mainly because that L2 mobility updates the configuration of the higher layer (RLC layer), the higher layer (RLC layer) needs to be notified;
- notifying the higher layer (PDCP layer) of occurrence of beam switch and/or cell change, which is performed mainly because that the L2 mobility updates the configuration of the higher layer (PDCP layer), the higher layer (PDCP layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 4: if the RLC layer receives an indication of beam switch and/or cell change sent from other layers, it performs one or more of the following behaviors:
- re-establishing an RLC entity;
- applying the configuration of the RLC layer of the target cell;
- notifying the lower layer (physical layer) of occurrence of beam switch and/or cell change;
- notifying the higher layer (PDCP layer) of occurrence of beam switch and/or cell change, which is performed mainly because that the L2 mobility updates the configuration of the higher layer (PDCP layer), the higher layer (PDCP layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 5: if the PDCP layer receives the indication of beam switch and/or cell change sent from other layers, it performs one or more of the following behaviors:
- re-establishing a PDCP entity;
- applying the configuration information of the PDCP layer of the target cell;
- notifying the lower layer (physical layer) of occurrence of beam switch and/or cell change;
- notifying the lower layer (RLC layer) of occurrence of beam switch and/or cell change, which is performed mainly because that L2 mobility updates the configuration of the lower layer (RLC layer), the lower layer (RLC layer) needs to be notified;
- notifying the higher layer (RRC layer) of occurrence of beam switch and/or cell change, which is performed mainly because that beam switch and/or serving cell change may affect some behaviors of the higher layer (RRC layer), the higher layer (RRC layer) needs to be notified.

Step 6: if the higher layer (RRC layer) receives the indication of beam switch and/or cell change from the lower layer (physical layer, MAC layer, RLC layer, or PDCP layer), it performs one or more of the following behaviors:
- applying system information of the target cell and maintaining updating of the system information;
- maintaining paging of the target cell;
- for the target cell being a SpCell, resetting an RLM configuration parameter; where optionally, the RLM configuration parameter includes an RLM-related timer and counter, such as T310, N310, and N311 parameters;
- for the target cell being a SpCell, applying an RLM configuration parameter of the target cell; where optionally, the RLM configuration parameter includes an RLM-related timer and counter, such as T310, N310, and N311 parameters;
- if the lower layer (physical layer, MAC layer, RLC layer, or PDCP layer) directly notifies the higher layer (RRC layer) of occurrence directly notifies the higher layer (RRC layer) of occurrence of, the higher layer (RRC layer) applies the configuration of the target cell, and configuration information of the corresponding physical layer, MAC layer, RLC layer, or PDCP layer are applied in an RRC signaling application process;
- notifying the lower layer (physical layer) to apply the configuration information of the physical layer of the target cell;
- notifying the lower layer (MAC layer) to apply the configuration information of the MAC layer of the target cell;
- notifying the lower layer (RLC layer) to apply the configuration information of the RLC layer of the target cell;
- notifying the lower layer (PDCP layer) to apply the configuration information of the PDCP layer of the target cell;
- notifying the lower layer (physical layer) of occurrence of beam switch and/or cell change;
- notifying the lower layer (RLC layer) of occurrence of beam switch and/or cell change, which is performed mainly because that L2 mobility updates the configuration of the lower layer (RLC layer), the lower layer (RLC layer) needs to be notified;
- notifying the lower layer (PDCP layer) of occurrence of beam switch and/or cell change, which is performed mainly because that L2 mobility updates the configuration of the lower layer (PDCP layer), the lower layer (PDCP layer) needs to be notified.

Step 7: if the lower layer (physical layer, MAC layer, RLC layer, or PDCP layer) receives the indication information sent from the higher layer (RRC layer), the lower layer (physical layer, MAC layer, RLC layer, or PDCP layer) applies the configuration information of the corresponding layer of the target cell.

Step 8: the UE stops a BFD/RLM process for a source cell, where the stopping time can be as follows: the UE immediately stops the BFD/RLM process when it receives the L2 mobility command sent by the network device, stops the BFD/RLM process when it starts to perform L2 mobility after a period of time (beamAppTime), stops the BFD/RLM process when it completes L2 mobility, or stops the BFD/RLM process when it completes serving cell change.

Step 9: the UE enables a BFD/RLM process of the target cell, where the enabling time may be as follows: the UE immediately enables the BFD/RLM process when it receives the L2 mobility command sent by the network device, enables the BFD/RLM process when it starts to perform L2 mobility after a period of time (beamAppTime), enables the BFD/RLM process when it completes L2 mobility, or enables the BFD/RLM process when it completes serving cell change.

It should be noted that the order of execution of the steps is not limited in this example, and they can be executed in any order without conflict therebetween; there is no restriction on the execution order of various optional behaviors of each step, and various optional behaviors of different steps can be arbitrarily combined, or some steps can be executed or not.

### Example 7

In this example, a network device configures a plurality sets of configuration information for a pre-configured target cell;
Step 1: a UE receives an L1 /L2 mobility command, and it needs to perform L1 /L2 mobility and also needs to perform serving cell change; and/or,
the UE successfully completes L1/ L2 mobility; at this point, the UE has received configuration information of candidate cells sent by the network device, where each candidate cell is configured with a plurality sets of configuration information, which may be two or three sets of configuration information. For example, if three sets of configuration information are configured, the three sets of configuration information may be:
   a first set of configuration information only including configuration information of a physical layer of each candidate cell;
   a second set of configuration information including configuration information of a physical layer, an MAC layer, and an RLC layer of each candidate cell;
   a third set of configuration information including configuration information of a physical layer, an MAC layer, an RLC layer, and a PDCP layer of each candidate cell.

Step 2: the UE receives indication information sent by the network device, where the indication information indicates which set of configuration information the UE should apply to complete the L1/L2 mobility and serving cell change; the UE applies, according to the indication information, the corresponding configuration information indicated by the network device to complete the L1/L2 mobility and serving cell change; and/or
the UE voluntarily determines which set of configuration should be applied and applies the corresponding configuration to complete the L1/L2 mobility and serving cell change.

FIG. 4 is a structural diagram of a terminal according to an embodiment of the present disclosure. The terminal provided in this embodiment can perform the processing flow provided in the method embodiment. As shown in FIG. 4, the terminal 400 includes a memory 401, a transceiver 402, and a processor 403.

In FIG. 4, a bus architecture may include any number of interconnected buses and bridges, specifically, various circuits of one or more processors represented by the processor 403 and the memory represented by the memory 401 are linked together. The bus architecture may also link together various other circuits such as peripherals, voltage regulators and power management circuits, which are well known in the art and therefore will not be further described herein. A bus interface provides an interface. The transceiver 402 may be a plurality of elements, i.e., including a transmitter and a receiver, providing units for communicating with various other apparatuses over transmission media including wireless channels, wired channels, fiber optic cables, etc. The processor 403 is responsible for managing the bus architecture and general processing, and the memory 401 may store data used by the processor 403 when performing operations.

The processor 403 may be a central processing unit (CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD), and the processor may also adopt a multi-core architecture.

The memory 403 is configured to store a computer program; the transceiver 402 is configured to transmit and receive data under control of the processor 403; and the processor 403 is configured to read the computer program in the memory 401 and perform the following operations:
receiving an L1/L2 mobility command sent by a network device, where the L1/L2 mobility command includes indication information of a target cell; and
performing a preset operation according to the L1/L2 mobility command or after the terminal successfully executes the L1/L2 mobility command.

In one or more embodiments of the present disclosure, the processor 403, when performing the preset operation, is configured to perform one or more of the following operations:
applying the configuration information of the target cell in configuration information of candidate cells;
performing inter-layer transmission of a notification of beam switch or serving cell change;
performing a specific operation corresponding to a type of the configuration information of the candidate cells;
making a change to hybrid automatic repeat request HARQ;
applying system information of the target cell and maintaining updating of the system information;
maintaining paging of the target cell;
resetting, if the target cell is a special cell SpCell, a radio link monitoring RLM configuration parameter;
applying, if the target cell is a SpCell, an RLM configuration parameter of the target cell;
stopping beam failure detection BFD and/or RLM for a source cell; and
enabling BFD and/or RLM for the target cell.

In one or more embodiments of the present disclosure, the processor 403, when applying the configuration information of the target cell in the configuration information of the candidate cells, is configured to:
apply, if the configuration information of the candidate cells is a first type of configuration information of the candidate cells, configuration information of a physical layer of the target cell in the configuration information of the candidate cells, where the first type of the configuration information of the candidate cells includes configuration information of a physical layer of each candidate cell; or
apply, if the configuration information of the candidate cells is a second type of configuration information of the candidate cells, configuration information of a physical layer, an MAC layer and an RLC layer of the target cell in the configuration information of the candidate cells, where the second type of the configuration information of the candidate cells includes configuration information of a physical layer, a medium access control MAC layer and a radio link control RLC layer of each candidate cell; or
apply, if the configuration information of the candidate cells is a third type of configuration information of the candidate cells, configuration information of a physical layer, an MAC layer, an RLC layer and a PDCP layer of the target cell in the configuration information of the candidate cells, where the third type of the configuration information of the candidate cells includes configuration information of a physical layer, an MAC layer, an RLC layer and a packet data convergence protocol PDCP layer of each candidate cell.

In one or more embodiments of the present disclosure, the processor 403, when performing the inter-layer transmission of the notification of beam switch or serving cell change, is configured to:
transmit the notification of beam switch or serving cell change from a layer that receives the L1/L2 mobility command to other layers; and/or
transmit the notification of beam switch or serving cell change from a layer that receives the notification of beam switch or serving cell change to other layers.

In one or more embodiments of the present disclosure, the processor 403, when applying the configuration information of the target cell in the configuration information of the candidate cells, is configured to:
directly apply the configuration information of the target cell in the configuration information of the candidate cells through a radio resource control RRC layer; or
send indication information to a lower layer through the RRC layer, where the indication information is used to enable the lower layer to apply, according to the indication information, configuration information of a corresponding layer of the target cell in the configuration information of the candidate cells; or
apply, after receiving the inter-layer transmitted notification of beam switch or serving cell change transmitted by other layers, configuration information of a corresponding layer of the target cell in the configuration information of the candidate cells.

In one or more embodiments of the present disclosure, the processor 403, when performing the specific operation corresponding to the type of the configuration information of the candidate cells, is configured to:
perform, if the configuration information of the candidate cells is a second type of configuration information of the candidate cells including configuration information of a physical layer, an MAC layer and an RLC layer of each candidate cell, one or more of the following specific operations corresponding to the type of the configuration information of the candidate cells:
resetting an MAC entity;
re-establishing an RLC entity; and
performing a PDCP recovery process.

In one or more embodiments of the present disclosure, the processor 403, when performing the specific operation corresponding to the type of the configuration information of the candidate cells, is configured to:
perform, if the configuration information of the candidate cells is a third type of configuration information of the candidate cells including configuration information of a physical layer, an MAC layer, an RLC layer and a PDCP layer of each candidate cell, one or more of the following specific operations corresponding to the type of the configuration information of the candidate cells:
resetting an MAC entity;
re-establishing an RLC entity; and
re-establishing a PDCP entity.

In one or more embodiments of the present disclosure, if the pre-configured configuration information of the candidate cells related to L1/L2 mobility includes at least two different types of configuration information of the candidate cells, the processor 403, before applying the configuration information of the target cell in the configuration information of the candidate cells, is further configured to:
receive indication information sent by the network device, where the indication information is used to indicate a type of the configuration information of the target cell that the terminal needs to apply; determine the type of the configuration information of the target cell according to the indication information, and apply the determined configuration information of the target cell to perform a preset operation corresponding to the type of the configuration information of the target cell; or
voluntarily determine the type of the configuration information of the target cell that the terminal needs to apply.

The terminal provided in the embodiment of the present disclosure can be specifically used to execute the method embodiment for the terminal-side, and the specific functions of which are not elaborated herein.

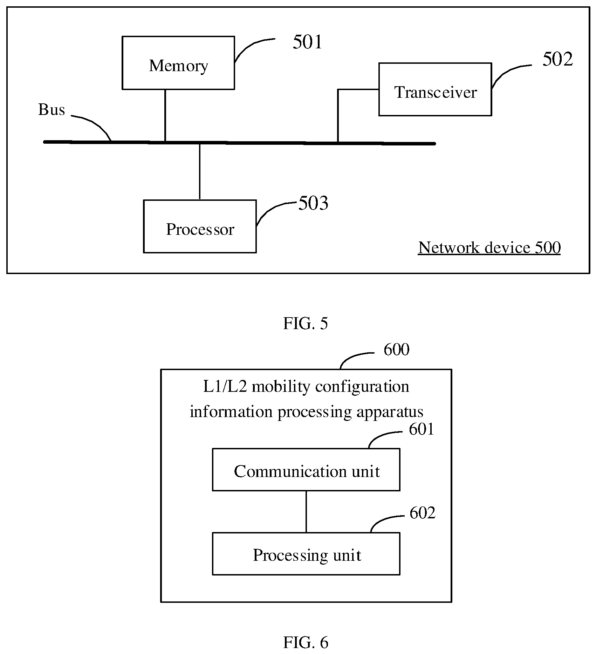

FIG. 5 is a structural diagram of a network device according to an embodiment of the present disclosure. The network device provided in this embodiment can perform the processing flow provided in the method embodiment for the network device-side. As shown in FIG. 5, the network device 500 includes a memory 501, a transceiver 502, and a processor 503.

In FIG. 5, a bus architecture may include any number of interconnected buses and bridges, specifically, various circuits of one or more processors represented by the processor 503 and the memory represented by the memory 501 are linked together. The bus architecture may also link together various other circuits such as peripherals, voltage regulators and power management circuits, which are well known in the art and therefore will not be further described herein. A bus interface provides an interface. The transceiver 502 may be a plurality of elements, i.e., including a transmitter and a receiver, providing units for communicating with various other apparatuses over transmission media including wireless channels, wired channels, fiber optic cables, etc. The processor 503 is responsible for managing the bus architecture and general processing, and the memory 501 may store data used by the processor 503 when performing operations.

The processor 503 may be a central processing unit (CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD), and the processor may also adopt a multi-core architecture.

The memory 503 is configured to store a computer program; the transceiver 502 is configured to transmit and receive data under control of the processor 503; and the processor 403 is configured to read the computer program in the memory 501 and perform the following operations:
determining an L1/L2 mobility command to be sent, where the L1/L2 mobility command includes indication information of a target cell; and
sending the L1/L2 mobility command to a terminal.

In one or more embodiments of the present disclosure, the processor 503, before sending the L1/L2 mobility command to the terminal, is further configured to:
send pre-configured configuration information of candidate cells related to L1/L2 mobility to the terminal.

In one or more embodiments of the present disclosure, the configuration information of the candidate cells includes at least one piece of the following configuration information:
a first type of configuration information of the candidate cells, including configuration information of a physical layer of each candidate cell;
a second type of configuration information of the candidate cells, including configuration information of a physical layer, an MAC layer and a radio link control RLC layer of each candidate cell; and
a third type of configuration information of the candidate cells, including configuration information of a physical layer, an MAC layer, an RLC layer and a PDCP layer of each candidate cell.

In one or more embodiments of the present disclosure, if the pre-configured configuration information of the candidate cells includes at least two different types of configuration information of the candidate cells, the processor 503 is further configured to:
send indication information to the terminal, where the indication information is used to indicate a type of configuration information of the target cell that the terminal needs to apply.

The network device provided in the embodiment of the present disclosure can be specifically used to execute the method embodiment for the network device-side, and the specific functions of which are not elaborated herein.

FIG. 6 is a structural diagram of an L1/L2 mobility command processing apparatus provided by an embodiment of the present disclosure. The L1/L2 mobility command processing apparatus provided in this embodiment can execute the processing flow provided by the method embodiment for the terminal-side. As shown in FIG. 6, the L1/L2 mobility command processing apparatus 600 includes a communication unit 601 and a processing unit 602.

The communication unit 601 is configured to receive an L1/L2 mobility command sent by a network device, where the L1/L2 mobility command includes indication information of a target cell; and
the processing unit 602 is configured to perform a preset operation according to the L1/L2 mobility command or after the terminal successfully executes the L1/L2 mobility command.

In one or more embodiments of the present disclosure, the processing unit 602, when performing the preset operation, is configured to perform one or more of following operations:
applying the configuration information of the target cell in configuration information of candidate cells;
performing inter-layer transmission of a notification of beam switch or serving cell change;
performing a specific operation corresponding to a type of the configuration information of the candidate cells;
making a change to hybrid automatic repeat request HARQ;
applying system information of the target cell and maintaining updating of the system information;
maintaining paging of the target cell;
resetting, if the target cell is a special cell SpCell, a radio link monitoring RLM configuration parameter;
applying, if the target cell is a SpCell, an RLM configuration parameter of the target cell;
stopping beam failure detection BFD and/or RLM for a source cell; and
enabling BFD and/or RLM for the target cell.

In one or more embodiments of the present disclosure, the processing unit 602, when applying the configuration information of the target cell in the configuration information of the candidate cells, is configured to:
apply, if the configuration information of the candidate cells is a first type of configuration information of the candidate cells, configuration information of a physical layer of the target cell in the configuration information of the candidate cells, where the first type of the configuration information of the candidate cells includes configuration information of a physical layer of each candidate cell; or
apply, if the configuration information of the candidate cells is a second type of configuration information of the candidate cells, configuration information of a physical layer, an MAC layer and an RLC layer of the target cell in the configuration information of the candidate cells, where the second type of the configuration information of the candidate cells includes configuration information of a physical layer, a medium access control MAC layer and a radio link control RLC layer of each candidate cell; or
apply, if the configuration information of the candidate cells is a third type of configuration information of the candidate cells, configuration information of a physical layer, an MAC layer, an RLC layer and a PDCP layer of the target cell in the configuration information of the candidate cells, where the third type of the configuration information of the candidate cells includes configuration information of a physical layer, an MAC layer, an RLC layer and a packet data convergence protocol PDCP layer of each candidate cell.

In one or more embodiments of the present disclosure, the processing unit 602, when performing the inter-layer transmission of the notification of beam switch or serving cell change, is configured to:
transmit the notification of beam switch or serving cell change from a layer that receives the L1/L2 mobility command to other layers; and/or
transmit the notification of beam switch or serving cell change from a layer that receives the notification of beam switch or serving cell change to other layers.

In one or more embodiments of the present disclosure, the processing unit 602, when applying the configuration information of the target cell in the configuration information of the candidate cells, is configured to:
directly apply the configuration information of the target cell in the configuration information of the candidate cells through a radio resource control RRC layer; or
send indication information to a lower layer through the RRC layer, where the indication information is used to enable the lower layer to apply, according to the indication information, configuration information of a corresponding layer of the target cell in the configuration information of the candidate cells; or
apply, after receiving the inter-layer transmitted notification of beam switch or serving cell change transmitted by other layers, configuration information of a corresponding layer of the target cell in the configuration information of the candidate cells.

In one or more embodiments of the present disclosure, the processing unit 602, when performing the specific operation corresponding to the type of the configuration information of the candidate cells, is configured to:
perform, if the configuration information of the candidate cells is a second type of configuration information of the candidate cells including configuration information of a physical layer, an MAC layer and an RLC layer of each candidate cell, one or more of the following specific operations corresponding to the type of the configuration information of the candidate cells:
resetting an MAC entity;
re-establishing an RLC entity; and
performing a PDCP recovery process.

In one or more embodiments of the present disclosure, the processing unit 602, when performing the specific operation corresponding to the type of the configuration information of the candidate cells, is configured to:
perform, if the configuration information of the candidate cells is a third type of configuration information of the candidate cells including configuration information of a physical layer, an MAC layer, an RLC layer and a PDCP layer of each candidate cell, one or more of the following specific operations corresponding to the type of the configuration information of the candidate cells:
resetting an MAC entity;
re-establishing an RLC entity; and
re-establishing a PDCP entity.

In one or more embodiments of the present disclosure, if the pre-configured configuration information of the candidate cells related to L1/L2 mobility includes at least two different types of configuration information of the candidate cells, the processing unit 602, before applying the configuration information of the target cell in the configuration information of the candidate cells, is further configured to:
receive, through the communication unit 601, indication information sent by the network device, where the indication information is used to indicate a type of the configuration information of the target cell that the terminal needs to apply; determine the type of the configuration information of the target cell according to the indication information, and apply the determined configuration information of the target cell to perform a preset operation corresponding to the type of the configuration information of the target cell; or
voluntarily determine the type of the configuration information of the target cell that the terminal needs to apply.

The L1/L2 mobility command processing apparatus provided in the embodiment of the present disclosure can be specifically used to execute the method embodiment for the terminal-side, and the specific functions of which are not elaborated herein.

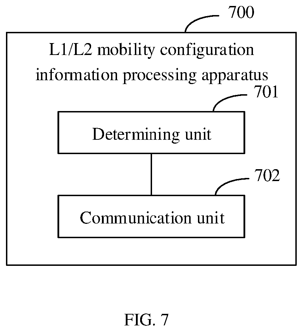

FIG. 7 is a structural diagram of an L1/L2 mobility command processing apparatus provided by an embodiment of the present disclosure. The L1/L2 mobility command processing apparatus provided in this embodiment can execute the processing flow provided by the method embodiment for the network device-side. As shown in FIG. 7, the L1/L2 mobility command processing apparatus 700 includes a determining unit 701 and a communication unit 702.

The determining unit 701 is configured to determine an L1/L2 mobility command to be sent, where the L1/L2 mobility command includes indication information of a target cell; and
a communication unit 702 is configured to send the L1/L2 mobility command to a terminal.

In one or more embodiments of the present disclosure, the communication unit 702, before sending the L1/L2 mobility command to the terminal, further includes:
sending pre-configured configuration information of candidate cells related to L1/L2 mobility to the terminal.

In one or more embodiments of the present disclosure, the configuration information of the candidate cells includes at least one piece of the following configuration information:
a first type of configuration information of the candidate cells, including configuration information of a physical layer of each candidate cell;
a second type of configuration information of the candidate cells, including configuration information of a physical layer, an MAC layer and a radio link control RLC layer of each candidate cell;
a third type of configuration information of the candidate cells, including configuration information of a physical layer, an MAC layer, an RLC layer and a PDCP layer of each candidate cell.

In one or more embodiments of the present disclosure, if the pre-configured configuration information of the candidate cells includes at least two different types of configuration information of the candidate cells, the communication unit 702 is further configured to:
send indication information to the terminal, where the indication information is used to indicate a type of configuration information of the target cell that the terminal needs to apply.

The L1/L2 mobility command processing apparatus provided in the embodiment of the present disclosure can be specifically used to execute the method embodiment for the network device-side, and the specific functions of which are not elaborated herein.

It should be noted that the division of units in the embodiments of the present disclosure is illustrative and is only a logical function division, and there may be other division manners in actual implementations. In addition, the functional units in the embodiments of the present disclosure may be integrated in a single processing unit, or each unit may be physically present separately, or two or more units may be integrated in a single unit. The above integrated units may be implemented either in the form of hardware or in the form of software functional units.

The integrated units may be stored in a processor-readable storage medium when implemented in the form of software function units and sold or used as an independent product. Based on such understanding, a technical solution of the present disclosure in essence, or the part of the technical solution which makes a contribution to the prior art, or all or part of the technical solution may be embodied in the form of a software product. The computer software product is stored in a storage medium, including several instructions for causing a computer device (which may be a personal computer, a server, or a network device, etc.) or a processor (processor) to execute all or part of the steps of the methods in the various embodiments of the present disclosure. The aforementioned storage medium includes various media that can store program codes, such as a U disk, a mobile hard disk, a read-only memory (Read-Only Memory, ROM), a random access memory (Random Access Memory, RAM), a magnetic disk or an optical disk.

Another embodiment of the present disclosure further provides a computer-readable storage medium storing a computer program, where the computer program is used to enable a processor to execute the L1/L2 mobility command processing method for the terminal-side or the network device-side.

The computer-readable storage medium may be any available medium or data storage device that can be accessed by a processor, including but not limited to a magnetic storage (such as a floppy disk, a hard disk, a magnetic tape, a magneto-optical disk (MO), etc.), an optical storage (such as a CD, a DVD, a BD, an HVD, etc.), and a semiconductor storage (such as an ROM, an EPROM, an EEPROM, a non-volatile memory (NAND FLASH), a solid state disk (SSD)), etc.

Another embodiment of the present disclosure further provides a computer program product, including a computer program, where the computer program is used to enable a processor to execute the L1/L2 mobility command processing method for the terminal-side or the network device-side.

Those skilled in the art should understand that the embodiments of the present disclosure may be provided as methods, systems, or computer program products. Accordingly, the present disclosure may take the form of an entirely hardware embodiment, an entirely software embodiment or an embodiment combining software and hardware aspects. Also, the present dislcosure may take the form of a computer program product embodied on one or more computer-usable storage media (including but not limited to a disk storage and an optical storage, etc.) containing computer-usable program codes therein.

The present disclosure is described with reference to flowcharts and/or block diagrams of methods, devices (systems), and computer program products according to the embodiments of the present disclosure. It should be understood that each procedure and/or block in the flowcharts and/or block diagrams, and combinations of procedures and/or blocks in the flowcharts and/or block diagrams may be implemented by the computer-executable instructions. These computer-executable instructions may be provided to a processor of a general-purpose computer, a special-purpose computer, an embedded processor, or other programmable data processing devices to produce a machine, such that an apparatus for implementing a function specified in one or more procedures of the flowcharts and/or one or more blocks of the block diagrams may be produced via the instructions executed by the processor of the computer or other programmable data processing devices.

These processor-executable instructions may also be stored in a processor-readable memory capable of directing a computer or other programmable data processing devices to operate in a specific manner, so that the instructions stored in the processor-readable memory produce a manufacturing product including an instruction apparatus, where the instruction apparatus implements the function specified in one or more procedures of the flow charts and/or one or more blocks of the block diagrams.

These processor-executable instructions may also be loaded onto a computer or other programmable data processing devices, so that a series of operational steps are performed on the computer or other programmable devices to produce computer-implemented processing. Therefore, the instructions executed on the computer or other programmable devices provide steps for implementing the steps of the functions specified in one or more procedures of the flowcharts and/or one or more blocks of the block diagrams.

Obviously, those skilled in the art can make various changes and modifications to the present disclosure without departing from the spirit and scope of the present disclosure. Thus, if these changes and modifications of the present disclosure fall within the scope of the claims of the present disclosure and their equivalent technologies, the present disclosure is also intended to include these changes and modifications.

## Claims

1. A layer 1/layer 2 L1/L2 mobility command processing method, **characterized by** being applied to a terminal, and comprising:
receiving an L1/L2 mobility command sent by a network device, wherein the L1/L2 mobility command comprises indication information of a target cell; and
performing a preset operation according to the L1/L2 mobility command or after the terminal successfully executes the L1/L2 mobility command.

2. The method according to claim 1, wherein the performing the preset operation comprises one or more of the following operations:
applying configuration information of the target cell in configuration information of candidate cells;
performing inter-layer transmission of a notification of beam switch or serving cell change;
performing a specific operation corresponding to a type of the configuration information of the candidate cells;
making a change to hybrid automatic repeat request HARQ;
applying system information of the target cell and maintaining updating of the system information;
maintaining paging of the target cell;
resetting, if the target cell is a special cell SpCell, a radio link monitoring RLM configuration parameter;
applying, if the target cell is a SpCell, an RLM configuration parameter of the target cell;
stopping beam failure detection BFD and/or RLM for a source cell; and
enabling BFD and/or RLM for the target cell.

3. The method according to claim 2, wherein the applying the configuration information of the target cell in the configuration information of the candidate cells comprises:
applying, if the configuration information of the candidate cells is a first type of configuration information of the candidate cells, configuration information of a physical layer of the target cell in the configuration information of the candidate cells, wherein the first type of the configuration information of the candidate cells comprises configuration information of a physical layer of each candidate cell; or
applying, if the configuration information of the candidate cells is a second type of configuration information of the candidate cells, configuration information of a physical layer, an MAC layer and an RLC layer of the target cell in the configuration information of the candidate cells, wherein the second type of the configuration information of the candidate cells comprises configuration information of a physical layer, a medium access control MAC layer and a radio link control RLC layer of each candidate cell; or
applying, if the configuration information of the candidate cells is a third type of configuration information of the candidate cells, configuration information of a physical layer, an MAC layer, an RLC layer and a PDCP layer of the target cell in the configuration information of the candidate cells, wherein the third type of the configuration information of the candidate cells comprises configuration information of a physical layer, an MAC layer, an RLC layer and a packet data convergence protocol PDCP layer of each candidate cell.

4. The method according to claim 2, wherein the performing the inter-layer transmission of the notification of beam switch or serving cell change comprises:
transmitting the notification of beam switch or serving cell change from a layer that receives the L1/L2 mobility command to other layers; and/or
transmitting the notification of beam switch or serving cell change from a layer that receives the notification of beam switch or serving cell change to other layers.

5. The method according to claim 3, wherein the applying the configuration information of the target cell in the configuration information of the candidate cells comprises:
directly applying the configuration information of the target cell in the configuration information of the candidate cells through a radio resource control RRC layer; or
sending indication information to a lower layer through the RRC layer, wherein the indication information is used to enable the lower layer to apply, according to the indication information, configuration information of a corresponding layer of the target cell in the configuration information of the candidate cells; or
applying, after receiving the inter-layer transmitted notification of beam switch or serving cell change transmitted by other layers, configuration information of a corresponding layer of the target cell in the configuration information of the candidate cells.

6. The method according to claim 2, wherein the performing the specific operation corresponding to the type of the configuration information of the candidate cells comprises:
performing, if the configuration information of the candidate cells is a second type of configuration information of the candidate cells comprising configuration information of a physical layer, an MAC layer and an RLC layer of each candidate cell, one or more of the following specific operations corresponding to the type of the configuration information of the candidate cells:
resetting an MAC entity;
re-establishing an RLC entity; and
performing a PDCP recovery process.

7. The method according to claim 2, wherein the performing the specific operation corresponding to the type of the configuration information of the candidate cells comprises:
performing, if the configuration information of the candidate cells is a third type of configuration information of the candidate cells comprising configuration information of a physical layer, an MAC layer, an RLC layer and a PDCP layer of each candidate cell, one or more of the following specific operations corresponding to the type of the configuration information of the candidate cells:
resetting an MAC entity;
re-establishing an RLC entity; and
re-establishing a PDCP entity.

8. The method according to any one of claims 2 to 7, if the pre-configured configuration information of the candidate cells comprises at least two different types of configuration information of the candidate cells, before the applying the configuration information of the target cell in the configuration information of the candidate cells, further comprising:
receiving indication information sent by the network device, wherein the indication information is used to indicate a type of the configuration information of the target cell that the terminal needs to apply; determining the type of the configuration information of the target cell according to the indication information, and applying the determined configuration information of the target cell to perform a preset operation corresponding to the type of the configuration information of the target cell; or
voluntarily determining the type of the configuration information of the target cell that the terminal needs to apply.

9. An L1/L2 mobility command processing method, **characterized by** being applied to a network device, and comprising:
determining an L1/L2 mobility command to be sent, wherein the L1/L2 mobility command comprises indication information of a target cell; and
sending the L1/L2 mobility command to a terminal.

10. The method according to claim 9, before the sending the L1/L2 mobility command to the terminal, further comprising:
sending pre-configured configuration information of candidate cells related to L1/L2 mobility to the terminal.

11. The method according to claim 10, wherein the configuration information of the candidate cells comprises at least one piece of the following configuration information:
a first type of configuration information of the candidate cells, comprising configuration information of a physical layer of each candidate cell;
a second type of configuration information of the candidate cells, comprising configuration information of a physical layer, an MAC layer and a radio link control RLC layer of each candidate cell; and
a third type of configuration information of the candidate cells, comprising configuration information of a physical layer, an MAC layer, an RLC layer and a PDCP layer of each candidate cell.

12. The method according to claim 11, if the pre-configured configuration information of the candidate cells comprises at least two different types of configuration information of the candidate cells, further comprising:
sending indication information to the terminal, wherein the indication information is used to indicate a type of configuration information of the target cell that the terminal needs to apply.

13. A terminal, **characterized by** comprising a memory, a transceiver, and a processor:
wherein the memory is configured to store a computer program; the transceiver is configured to transmit and receive data under control of the processor; and the processor is configured to read the computer program in the memory and perform the following operations:
receiving an L1/L2 mobility command sent by a network device, wherein the L1/L2 mobility command comprises indication information of a target cell; and
performing a preset operation according to the L1/L2 mobility command or after the terminal successfully executes the L1/L2 mobility command.

14. The terminal according to claim 13, wherein the processor, when performing the preset operation, is configured to perform one or more of the following operations:
applying configuration information of the target cell in configuration information of candidate cells;
performing inter-layer transmission of a notification of beam switch or serving cell change;
performing a specific operation corresponding to a type of the configuration information of the candidate cells;
making a change to hybrid automatic repeat request HARQ;
applying system information of the target cell and maintaining updating of the system information;
maintaining paging of the target cell;
resetting, if the target cell is a special cell SpCell, a radio link monitoring RLM configuration parameter;
applying, if the target cell is a SpCell, an RLM configuration parameter of the target cell;
stopping beam failure detection BFD and/or RLM for a source cell; and
enabling BFD and/or RLM for the target cell.

15. The terminal according to claim 14, wherein the processor, when applying the configuration information of the target cell in the configuration information of the candidate cells, is configured to:
apply, if the configuration information of the candidate cells is a first type of configuration information of the candidate cells, configuration information of a physical layer of the target cell in the configuration information of the candidate cells, wherein the first type of the configuration information of the candidate cells comprises configuration information of a physical layer of each candidate cell; or
apply, if the configuration information of the candidate cells is a second type of configuration information of the candidate cells, configuration information of a physical layer, an MAC layer and an RLC layer of the target cell in the configuration information of the candidate cells, wherein the second type of the configuration information of the candidate cells comprises configuration information of a physical layer, a medium access control MAC layer and a radio link control RLC layer of each candidate cell; or
apply, if the configuration information of the candidate cells is a third type of configuration information of the candidate cells, configuration information of a physical layer, an MAC layer, an RLC layer and a PDCP layer of the target cell in the configuration information of the candidate cells, wherein the third type of the configuration information of the candidate cells comprises configuration information of a physical layer, an MAC layer, an RLC layer and a packet data convergence protocol PDCP layer of each candidate cell.

16. The terminal according to claim 14, wherein the processor, when performing the inter-layer transmission of the notification of beam switch or serving cell change, is configured to:
transmit the notification of beam switch or serving cell change from a layer that receives the L1/L2 mobility command to other layers; and/or
transmit the notification of beam switch or serving cell change from a layer that receives the notification of beam switch or serving cell change to other layers.

17. The terminal according to claim 15, wherein the processor, when applying the configuration information of the target cell in the configuration information of the candidate cells, is configured to:
directly apply the configuration information of the target cell in the configuration information of the candidate cells through a radio resource control RRC layer; or
send indication information to a lower layer through the RRC layer, wherein the indication information is used to enable the lower layer to apply, according to the indication information, configuration information of a corresponding layer of the target cell in the configuration information of the candidate cells; or
apply, after receiving the inter-layer transmitted notification of beam switch or serving cell change transmitted by other layers, configuration information of a corresponding layer of the target cell in the configuration information of the candidate cells.

18. The terminal according to claim 14, wherein the processor, when performing the specific operation corresponding to the type of the configuration information of the candidate cells, is configured to:
perform, if the configuration information of the candidate cells is a second type of configuration information of the candidate cells comprising configuration information of a physical layer, an MAC layer and an RLC layer of each candidate cell, one or more of the following specific operations corresponding to the type of the configuration information of the candidate cells:
resetting an MAC entity;
re-establishing an RLC entity; and
performing a PDCP recovery process.

19. The terminal according to claim 14, wherein the processor, when performing the specific operation corresponding to the type of the configuration information of the candidate cells, is configured to:
perform, if the configuration information of the candidate cells is a third type of configuration information of the candidate cells comprising configuration information of a physical layer, an MAC layer, an RLC layer and a PDCP layer of each candidate cell, one or more of the following specific operations corresponding to the type of the configuration information of the candidate cells:
resetting an MAC entity;
re-establishing an RLC entity; and
re-establishing a PDCP entity.

20. The terminal according to any one of claims 14 to 19, wherein if the pre-configured configuration information of the candidate cells comprises at least two different types of configuration information of the candidate cells, the processor, before applying the configuration information of the target cell in the configuration information of the candidate cells, is further configured to:
receive indication information sent by the network device, wherein the indication information is used to indicate a type of the configuration information of the target cell that the terminal needs to apply; determine the type of the configuration information of the target cell according to the indication information, and apply the determined configuration information of the target cell to perform a preset operation corresponding to the type of the configuration information of the target cell; or
voluntarily determine the type of the configuration information of the target cell that the terminal needs to apply.

21. A network device, **characterized by** comprising a memory, a transceiver, and a processor:
wherein the memory is configured to store a computer program; the transceiver is configured to transmit and receive data under control of the processor; and the processor is configured to read the computer program in the memory and perform the following operations:
determining an L1/L2 mobility command to be sent, wherein the L1/L2 mobility command comprises indication information of a target cell; and
sending the L1/L2 mobility command to a terminal.

22. The network device according to claim 21, wherein the processor, before sending the L1/L2 mobility command to the terminal, is further configured to:
send pre-configured configuration information of candidate cells related to L1/L2 mobility to the terminal.

23. The network device according to claim 22, wherein the configuration information of the candidate cells comprises at least one piece of the following configuration information:
a first type of configuration information of the candidate cells, comprising configuration information of a physical layer of each candidate cell;
a second type of configuration information of the candidate cells, comprising configuration information of a physical layer, an MAC layer and a radio link control RLC layer of each candidate cell; and
a third type of configuration information of the candidate cells, comprising configuration information of a physical layer, an MAC layer, an RLC layer and a PDCP layer of each candidate cell.

24. The network device according to claim 23, wherein if the pre-configured configuration information of the candidate cells comprises at least two different types of configuration information of the candidate cells, the processor is further configured to:
send indication information to the terminal, wherein the indication information is used to indicate a type of configuration information of the target cell that the terminal needs to apply.

25. An L1/L2 mobility command processing apparatus, **characterized by** comprising:
a communication unit, configured to receive an L1/L2 mobility command sent by a network device, wherein the L1/L2 mobility command comprises indication information of a target cell; and
a processing unit, configured to perform a preset operation according to the L1/L2 mobility command or after the terminal successfully executes the L1/L2 mobility command.

26. The L1/L2 mobility command processing apparatus according to claim 25, wherein the processing unit, when performing the preset operation, is configured to perform one or more of the following operations:
applying configuration information of the target cell in configuration information of candidate cells;
performing inter-layer transmission of a notification of beam switch or serving cell change;
performing a specific operation corresponding to a type of the configuration information of the candidate cells;
making a change to hybrid automatic repeat request HARQ;
applying system information of the target cell and maintaining updating of the system information;
maintaining paging of the target cell;
resetting, if the target cell is a special cell SpCell, a radio link monitoring RLM configuration parameter;
applying, if the target cell is a SpCell, an RLM configuration parameter of the target cell;
stopping beam failure detection BFD and/or RLM for a source cell; and
enabling BFD and/or RLM for the target cell.

27. The L1/L2 mobility command processing apparatus according to claim 26, wherein the processing unit, when applying the configuration information of the target cell in the configuration information of the candidate cells, is configured to:
apply, if the configuration information of the candidate cells is a first type of configuration information of the candidate cells, configuration information of a physical layer of the target cell in the configuration information of the candidate cells, wherein the first type of the configuration information of the candidate cells comprises configuration information of a physical layer of each candidate cell; or
apply, if the configuration information of the candidate cells is a second type of configuration information of the candidate cells, configuration information of a physical layer, an MAC layer and an RLC layer of the target cell in the configuration information of the candidate cells, wherein the second type of the configuration information of the candidate cells comprises configuration information of a physical layer, a medium access control MAC layer and a radio link control RLC layer of each candidate cell; or
apply, if the configuration information of the candidate cells is a third type of configuration information of the candidate cells, configuration information of a physical layer, an MAC layer, an RLC layer and a PDCP layer of the target cell in the configuration information of the candidate cells, wherein the third type of the configuration information of the candidate cells comprises configuration information of a physical layer, an MAC layer, an RLC layer and a packet data convergence protocol PDCP layer of each candidate cell.

28. The L1/L2 mobility command processing apparatus according to claim 26, wherein the processing unit, when performing the inter-layer transmission of the notification of beam switch or serving cell change, is configured to:
transmit the notification of beam switch or serving cell change from a layer that receives the L1/L2 mobility command to other layers; and/or
transmit the notification of beam switch or serving cell change from a layer that receives the notification of beam switch or serving cell change to other layers.

29. The L1/L2 mobility command processing apparatus according to claim 27, wherein the processing unit, when applying the configuration information of the target cell in the configuration information of the candidate cells, is configured to:
directly apply the configuration information of the target cell in the configuration information of the candidate cells through a radio resource control RRC layer; or
send indication information to a lower layer through the RRC layer, wherein the indication information is used to enable the lower layer to apply, according to the indication information, configuration information of a corresponding layer of the target cell in the configuration information of the candidate cells; or
apply, after receiving the inter-layer transmitted notification of beam switch or serving cell change transmitted by other layers, configuration information of a corresponding layer of the target cell in the configuration information of the candidate cells.

30. The L1/L2 mobility command processing apparatus according to claim 26, wherein the processing unit, when performing the specific operation corresponding to the type of the configuration information of the candidate cells, is configured to:
perform, if the configuration information of the candidate cells is a second type of configuration information of the candidate cells comprising configuration information of a physical layer, an MAC layer and an RLC layer of each candidate cell, one or more of the following specific operations corresponding to the type of the configuration information of the candidate cells:
resetting an MAC entity;
re-establishing an RLC entity; and
performing a PDCP recovery process.

31. The L1/L2 mobility command processing apparatus according to claim 26, wherein the processing unit, when performing the specific operation corresponding to the type of the configuration information of the candidate cells, is configured to:
perform, if the configuration information of the candidate cells is a third type of configuration information of the candidate cells comprising configuration information of a physical layer, an MAC layer, an RLC layer and a PDCP layer of each candidate cell, one or more of the following specific operations corresponding to the type of the configuration information of the candidate cells:
resetting an MAC entity;
re-establishing an RLC entity; and
re-establishing a PDCP entity.

32. The L1/L2 mobility command processing apparatus according to any one of claims 26-31, wherein if the pre-configured configuration information of the candidate cells comprises at least two different types of configuration information of the candidate cells, the processing unit, before applying the configuration information of the target cell in the configuration information of the candidate cells, is further configured to:
receive, through the communication unit, indication information sent by the network device, wherein the indication information is used to indicate a type of the configuration information of the target cell that the terminal needs to apply; determine the type of the configuration information of the target cell according to the indication information, and apply the determined configuration information of the target cell to perform a preset operation corresponding to the type of the configuration information of the target cell; or
voluntarily determine the type of the configuration information of the target cell that the terminal needs to apply.

33. An L1/L2 mobility command processing apparatus, **characterized by** comprising:
a determining unit, configured to determine an L1/L2 mobility command to be sent, wherein the L1/L2 mobility command comprises indication information of a target cell; and
a communication unit, configured to send the L1/L2 mobility command to a terminal.

34. The L1/L2 mobility command processing apparatus according to claim 33, wherein the communication unit, before sending the L1/L2 mobility command to the terminal, is further configured to:
send pre-configured configuration information of candidate cells related to L1/L2 mobility to the terminal.

35. The L1/L2 mobility command processing apparatus according to claim 34, wherein the configuration information of the candidate cells comprises at least one piece of the following configuration information:
a first type of configuration information of the candidate cells, comprising configuration information of a physical layer of each candidate cell;
a second type of configuration information of the candidate cells, comprising configuration information of a physical layer, an MAC layer and a radio link control RLC layer of each candidate cell; and
a third type of configuration information of the candidate cells, comprising configuration information of a physical layer, an MAC layer, an RLC layer and a PDCP layer of each candidate cell.

36. The L1/L2 mobility command processing apparatus according to claim 35, wherein if the pre-configured configuration information of the candidate cells comprises at least two different types of configuration information of the candidate cells, the communication unit is further configured to:
send indication information to the terminal, wherein the indication information is used to indicate a type of configuration information of the target cell that the terminal needs to apply.

37. A processor-readable storage medium, **characterized by** storing a computer program, wherein the computer program is used to enable the processor to execute the method according to any one of claims 1 to 8 or 9 to 12.
